# EUROPEAN PATENT APPLICATION

(11) **EP 3 957 189 A1**
(43) Date of publication of application: **23.02.2022**
(21) Application number: 20903676.3
(22) Date of filing: 08.12.2020
(51) Int. Cl.: A23N 12/08, A23N 12/10

(54) **ROASTER/ROASTING DEVICE AND ROASTING METHOD**

(30) Priority: 18.12.2019 JP 2019228062
(71) Applicant: Anaori Carbon Co., Ltd., Ibaraki-shi, Osaka 567-0028 (JP)
(72) Inventor: NISHIDA, Ryuichi, Takatsuki-shi, Osaka 569-1123 (JP); NISHIDA, Yoshimi, Takatsuki-shi, Osaka 569-1123 (JP); ANAORI, Eiichi, Ibaraki-shi, Osaka 567-0028 (JP); NISHIMURA, Taichi, Ibaraki-shi, Osaka 567-0028 (JP); SOGABE, Toshiaki, Ibaraki-shi, Osaka 567-0028 (JP); INUKAI, Kenji, Ibaraki-shi, Osaka 567-0028 (JP); KANZAKI, Hironori, Ibaraki-shi, Osaka 567-0028 (JP); HIROBE, Shusuke, Ibaraki-shi, Osaka 567-0028 (JP); KATO, Noriaki, Ibaraki-shi, Osaka 567-0028 (JP); ANAORI, Chiho, Ibaraki-shi, Osaka 567-0028 (JP)
(74) Representative: Isarpatent
(86) International application number: PCT/JP2020/045619
(87) International publication number: WO 2021/124978

(57) **Abstract**

Disclosed is a roaster/roasting machine for roasting an edible plant such as coffee beans. This roaster/roasting machine comprises a roasting chamber for containing a substance to be roasted, the roasting chamber being made of a carbon material (graphite, CC composite, etc.). Thus, the roaster/roasting machine can utilize far-infrared rays for roasting with a simple structure. A roaster comprising an open top container body and a closure member may be used for home roasting. A roasting machine comprising a drum-shaped roasting chamber may be a professional roasting machine. The present invention can be applied to any of a direct-, semi-hot air-, and hot air-heating type roaster/roasting machine. Also disclosed is a method for roasting beans such as coffee beans, the method comprising contacting beans with a heated graphite.

## Description

### TECHNICAL FIELD

The present invention relates to a roaster/roasting machine used for roasting an edible plant which is transformed into food by roasting, such as beans (e.g. coffee beans and cacao beans) and tea leaves (e.g. hojicha). In particular, the present invention relates to a coffee beans roaster/roasting machine for home roasting in small amount for personal consumption or for industrial roasting in a coffee-house or production facility, and a roasting method using the same.

### BACKGROUND

A roasting process is a processing process of edible plant such as beans (coffee beans, cacao beans, etc.), seeds (sesame, sunflower seeds, etc.), nuts (walnuts and almonds, ginkgo, etc.) and tea leaves (hojicha, etc.).

In the roasting process, edible plant is heated and dried without medium such as oil or water, and is changed in chemical properties of proteins contained in the edible plant, resulting in the change of its flavor.

Some kinds of beans become edible by the roasting process. In particular, coffee beans are given their specific aroma and/or flavor through the roasting process, so the roasting process is an important process.

In the olden days of Japan, home roasting of sesame and tea leaves has been conducted with a ceramic handy roaster like a skillet in order to give the sesame or tea leaves a mellow flavor. But when roasting with the handy roaster, the user has to shake the handy roaster by moving its handle while heating the roaster by a gas or electric stove.

On the other hand, industrial roasting for the production of commercial foods is generally conducted by direct-heating, hot air-heating or semi-hot air-heating of a container or drum called as a roasting chamber. The direct heating is a heating method where a substance contained in the roasting chamber is heated directly with a flame from a gas stove or a gas burner. In the hot air-heating method, a substance contained in the roasting chamber is heated by hot air passing through the roasting chamber. The semi-hot air heating method is a combination of the hot air and the direct heating methods.

Since roasting process affects flavor of the roasted product, a batch of substance roasted at the same time should be uniformly heated. In order to achieve the uniform heating, the substance contained in the roasting chamber are agitated or the roasting chamber is rotated or shaken while being heated. Under the situation, various roasting machines or roasters are proposed and a relevant heating method and a driving mechanism for rotation, movement and churn are also proposed.

The roasting chamber may be in any shapes such as tray, bowl, cylinder, wire mesh, and so on. An appropriate shape is selected according to the heating type, a batch size for a roasting chamber, dimensions of the roasting machine, incidental equipment, and so on.

The roasting chamber is typically made of metal such as iron because the metal has a high thermal conductivity and is excellent in heat resistance and durability. Moreover, processing of a metallic roasting chamber is not troublesome for a driving mechanism such as a stirring device to be mounted on the chamber.

As previously described, an industrial roasting machine is designed to evenly distribute heat energy to a batch of beans by automatically stirring beans with a driving mechanism for either stirring propeller or rotation of a cylindrical roasting chamber. However, in the case that a roasting process is performed with a roasting machine including a metallic chamber under roasting temperature- and time-programmed control, the produced roasted beans tend to have monotonous aroma and taste. Coffee bean has a multilayered structure and its internal chemical change greatly affect its aroma and taste. Therefore, it is not satisfactory that coffee beans in batch which are roasted at the same time are apparently evenly heated. The core (endosperm) of each bean belonging to the batch needs to be heated to the same extent.

Various appliances using far-infrared rays for roasting a hard substance such as coffee bean have been proposed in order to give a desirable flavor to the substance.

For example, in order to give a taste and aroma peculiar to charcoal-grilling to the substance, a method of roasting using charcoal as a heat source has been proposed (JP 3645506 B). However, charcoal is expensive as a heat source, and moreover, it is not easy to control the heat energy from the charcoal. For these reasons, charcoal is not an appropriate heat source of professional roasting machines.

JP H3-025153 A and JP H5-002077 Y proposed an industrial roasting machine which uses an infrared heater as a heat source. The infrared heater is a ceramic plate containing an electric heating resistor such as nichrome wire. In the proposed roasting machine, the heater is arranged in or around a metallic drum, so that infrared rays can radiate from the heater to the coffee beans equally in the drum. JP 2008-173111 A suggests a method of roasting with use of a roasting machine which comprises a ceramic dome covering a roasting tank (roasting chamber) and a combustion device arranged around the dome. In this method, coffee beans in the roasting tank are heated by both radiant heat of far-infrared rays emitted from the ceramic dome and convection heat of the heated air from the heated ceramic dome.

Moreover, a roasting machine utilizing far-infrared ray in addition to a conventional heating means such as hot air or flame is suggested. For example, a roaster having a drum entirely made of ceramic (JP 2001-197875 A); a medium- or large-sized roasting machine including a porous ceramic roasting chamber which is an accommodation of coffee beans (JP 2006-149204 A); a roaster equipped with a ceramic perforated plate between inner and outer metallic nets (JP 4111812 B); a roaster comprising a roasting chamber and ceramic balls as a far-infrared generator placed at the bottom of the roasting chamber (JP 2012-235760 A); a roaster comprising a metallic container (roasting chamber) wherein the metallic container is coated with a ceramic coating or a far-infrared substance on its inside wall (JP 2002-119269 A, JP H2-039688 U, JP H3-266966 A) and so on. Furthermore, an automatic coffee maker including a roasting kiln, the kiln having a far-infrared heating element which is attached to or coated on the inner surface of the kiln (JP 2003-070652 A).

### PRIOR ART

### PATENT DOCUMENT

[Patent Document 1] JP 3645506 B
[Patent Document 2] JP H3-025153 B
[Patent Document 3] JP H5-002077 Y
[Patent Document 4] JP 2008-173111 A
[Patent Document 5] JP 2001-197875 A
[Patent Document 6] JP 2006-149204 A
[Patent Document 7] JP 4111812 B
[Patent Document 8] JP 2012-235760 A
[Patent Document 9] JP 2002-119269 A
[Patent Document 10] JP H2-039688 U
[Patent Document 11] JP H3-266966 A
[Patent Document 12] JP 2003-070652 A

### SUMMARY OF THE INVENTION

### TECHNICAL PROBLEM TO BE SOLVED BY THE INVENTION

A roaster/roasting machine utilizing far-infrared rays may give a more mellow flavor than a roasting machine which includes a metallic roasting chamber. However, a roasting machine including a ceramic roasting chamber, like roasting machines suggested as in Patent Documents 5-7, has disadvantages in efficiency of the production of roasted product and energy costs due to a lower thermal conductivity of ceramics than that of metal. This is because the professional roasting machines repeat a cycle of processes consisting of preheating, roasting and cooling of the roasting chamber. Therefore, a roaster comprising a ceramic roasting chamber, like a skillet made of porcelain, is actually limited to home roasting or roasting for personal consumption.

The roasting machine suggested in Patent Documents 2-4 utilizes a far-infrared heater as a heat source or arranges a far-infrared generator around the roasting chamber. Thus, the configuration or design becomes complex because positions of the infrared heater or generator and the roasting chamber are decisive of attaining a satisfactory radiant heat effect of infrared rays. In addition, a roasting chamber included in a medium- or large-sized roasting machine is too large to be heated sufficiently by an ordinary infrared heater.

Like roasting machines disclosed in Patent Documents 8-12, a ceramic coating layer or far-infrared ray-generating substances applied or adhered on the surface of the roasting chamber may be worn to be finally lost due to friction against beans which are stirred by rotation of the roasting chamber. For these reasons, this technique is practically limited to either a coffee roasting machine used at home or a roasting chamber which is subjected to less friction against beans. In conclusion, this technique is difficult to apply to an industrial roasting machine.

The present invention has been made in view of the above circumstances, and an object of the present invention is to provide a roasting method capable of heating the core even in hard and multilayered bean such as green coffee bean, and sustaining an intended productivity, with use of a roaster having a simple configuration. Also, an object of the invention is to provide a home roasting machine and a commercial roasting machine both of which include a roasting chamber capable of performing the inventive roasting method.

### MEANS FOR SOLVING THE PROBLEM

The roaster/roasting machine of the present invention is characterized in a roasting chamber for roasting edible plant. The roasting chamber is made of a carbon material having a bulk density of 1.2 to 2.2 g/cm³ and a thermal conductivity of 60 to 200 W/m · K at 25 °C.

A preferable carbon material is a graphite or a composite of carbon reinforced with carbon fiber. Further, the inner surface of the roasting chamber may be coated with a glass-like carbon coat, a pyrolytic carbon coat, a ceramic coat or a polysiloxane-based coat.

The roasting chamber may include either a container body having an opening at its top (open top container body) or a cylindrical body having a circular or polygonal cross section perpendicular to a longitudinal axis of the cylindrical body.

In a preferable embodiment including the open top container body, the roaster further comprises a closure member for closing the opening. The closure member may have an opening at any position or a notched portion at the peripheral edge of the closure member, thereby air flows from inside to outside of the container body via the opening or the notched portion.

In an embodiment of a drum-shaped roasting chamber including cylindrical body, a variety of modification is applicable. For example, an inlet/outlet for the edible plant is open at one longitudinal distal end or on the peripheral wall of the cylindrical body; the cylindrical body has an opening at one distal end and a fixed perforated plate or an openable perforated closure member at the other distal end wherein the perforated plate and the perforated closure member have a plurality of holes through which air flow can pass but the edible plant cannot pass; and the cylindrical body having an open end is housed in a casing provided with an inlet/outlet for charging/discharging the edible plant, the inlet/outlet communicating with the open end.

In the embodiment of the roasting chamber including a cylindrical body, a rotation mechanism may be mounted on the roasting chamber.

According to the invention, the roasting machine may optionally comprise a heating means for heating the roasting chamber. Examples of the heating means include a gas stove, a gas combustion chamber, a heater, an induction heating coil, or a combination thereof. The roasting machine may further comprise a control unit for controlling a roasting time and roasting temperature.

In yet another embodiment, the roasting machine may further comprise a stirring member for stirring the edible plant within the roasting chamber.

The present invention also provides a roasting machine comprising a hot air generator for heating edible plant; a drum-shaped roasting chamber having a fixed perforated plate or a removable closure member at one side end of the drum, and being arranged horizontally to the ground wherein hot air from the hot air generator can pass through the perforation of the plate or the closure member; and a rotation mechanism for rotating the roasting chamber. The roasting chamber is characterized by being made of a carbon material having a bulk density of 1.2 to 2.2 g/cm³ and a thermal conductivity of 60 to 200 W/m · K at 25 °C.

The roasting machine may optionally comprise a control unit for controlling a roasting time and temperature in the roasting chamber.

In another aspect of the invention, there is provided a method for roasting. The roasting method comprises contacting beans to be roasted (typically green coffee beans) with a heated graphite.

### EFFECT OF THE INVENTION

In a roaster/roasting machine of the present invention, the roasting chamber itself is made of a carbon material which has a high thermal conductivity and is capable of emitting far-infrared rays. Therefore, the configuration of the roaster/roasting machine is simple but may utilize far-infrared ray. By use of the roasting machine of the invention, the core of a multilayered substance such as a coffee bean may be heated while suppressing overheating of the outer surface (hull) of the multilayered substance. This means that even when the roasting process is conducted under automatic control based on a programmed roasting profile, the produced roasted beans have a mellow flavor and the difference in quality between batches of roasted beans is minor.

Furthermore, the roasting time and cooling time can be shortened due to high thermal conductivity of the carbon material. The shortened cycle time of roasting process can improve the productivity of roasted coffee beans.

### BRIEF DESCRIPTION OF THE DRAWINGS

FIG. 1 is a schematic cross-sectional view showing a configuration of a container type roaster according to a first embodiment of the present invention.
FIG. 2 is a perspective view showing a configuration of a modified example of a roaster according to a first embodiment of the present invention.
FIG. 3 is a schematic cross-sectional view showing a configuration of a modified example of a roaster according to a first embodiment of the present invention.
FIG. 4 is a schematic cross-sectional view showing a configuration of a modified example of a roaster according to a first embodiment of the present invention.
FIG. 5 is a view showing a configuration of an example of a roaster according to a second embodiment of the present invention.
FIG. 6 is a schematic view showing a configuration of an example of a roasting machine according to a third embodiment of the present invention.
FIG. 7 is a schematic view showing another example of a drum-shaped roasting chamber in a roasting machine according to a third embodiment of the present invention.
FIG. 8 is a schematic view showing another example of a drum-shaped roasting chamber in a roasting machine according to a third embodiment of the present invention.
FIG. 9 is a view showing an embodiment of a drum-shaped roasting chamber used in a roasting machine according to a fourth embodiment of the present invention.
Fig. 10 is a schematic view for explaining a configuration of a professional roasting machine.
FIG. 11 is a schematic view showing an example of a drum-shaped roasting chamber in a roasting machine according to a fifth embodiment of the present invention.
FIG. 12 is a schematic view for explaining another embodiment of a roasting machine according to a fifth embodiment of the present invention.
FIG. 13 is a schematic view showing an example of a roasting chamber being used in a roasting machine according to a sixth embodiment of the present invention.
FIG. 14 is a view showing a configuration of a drum-shaped roasting chamber used in a comparative example.
FIG. 15 is a graph showing evaluation results by the taste sensing system.
FIG. 16 is a graph showing evaluation results by the taste sensing system.

### EMBODIMENT FOR CARRYING OUT THE INVENTION

A roaster and roasting machine of the invention are characterized in that a roasting chamber included in the roaster or roasting machine is made of a carbon material having a bulk density of 1.2 to 2.2 g/cm³ and a thermal conductivity of 60 to 200 W/m · K at 25 °C. That is, any roasters and roasting machines each comprising a roasting chamber made of the said carbon material are included in the scope of the invention, and an edible plant as a substance to be roasted includes beans, seeds, nuts, and tea leaves, preferably beans, more preferably coffee beans. A coffee beans roaster/roasting machine of the invention covers a roaster suitable for home roasting for personal consumption of several cups of coffee, a small- or medium-sized professional roasters having a batch size of about 200 g to about 10 kg of coffee beans which are roasted at one time, and a large-sized professional roasting machine having a batch size of 10 to 100 kg of coffee beans which are roasted at one time under automatic control.

A bulk density of the carbon material used as a constituent material of the roasting chamber is from 1.2 to 2.2 g/cm³, preferably 1.3 to 2.0 g/cm³, more preferably 1.5 to 1.9 g/cm³, and further preferably 1.7 to 1.9 g/cm³. The thermal conductivity at 25 °C of the carbon material is 60 W/m · K or more, preferably 80 W/m · K or more, more preferably 100 W/m · K or more, and the upper limit is usually 200 W/m · K or less.

The roasting chamber is made of graphite, carbon fiber reinforced carbon composite (CC composite), glass-like carbon (non-graphite obtained by carbonizing a thermosetting resin such as phenolic resin), porous carbon (porous carbon graphite) or a like carbon material. Among these, graphite and CC composite are preferable, and graphite is more preferable. As the graphite, not only natural graphite and artificial graphite, but also charcoal and carbonized product of pitch or synthetic resin may be used. A preferable graphite is an artificial graphite. An artificial graphite meeting the above-mentioned ranges in bulk density and thermal conductivity is available on the market.

The artificial graphite is usually produced by kneading and mixing an aggregate such as coke with a binder (e.g., pitch or coal tar) to form into a desired shape, followed by firing and heating at a higher temperature. The graphite may be formed by extrusion molding, pressure molding, vibration molding, cold hydrostatic pressure (CIP) molding or the like. In the process of firing, pitch impregnation may be optionally conducted so as to attain a target specific gravity and porosity.

A graphite roasting chamber having a desired shape and size may be manufactured by trimming a pre-molded article of artificial graphite having a substantially desired shape.

A roasting chamber made of carbon fiber reinforced carbon composite (CC composite) may be produced by shaping a carbon fiber reinforced resin (CFRP) as a raw material of CC composite into a desired shape (polygonal prism, cylindrical shape, bowl shape, etc.) and firing it. In this case, the space between the carbon fibers of woven fabric serving as a reinforce, which is called interfiber gap, can act as a perforation for ventilation. This is an advantage because post-processing such as ventilation can be eliminated. Furthermore, CFRP is favorable because the size and occupancy ratio of the perforation can be adjusted by the texture and weave of the fabric.

The inner and/or outer surface of the roasting chamber (container body or cylindrical body) may be coated with ceramic (e.g., alumina, silica, and zirconia) coat, glass coat, glass-like carbon coat, polysiloxane-based heat-resistant coat, and pyrolytic carbon coat, according to needs. The glass coating layer or polysiloxane-based heat-resistant coating layer has a networked structure through siloxane bonds formed by heating. The ceramic coating layer may be formed by applying a coating material containing ceramic powder and then drying it, or by chemical vapor deposition (CVD) or flame spraying of ceramic powder. Of these, a polysiloxane-based heat-resistant coat is preferable because it can be formed by a readily application such as brush coating or spray coating, and thereafter drying and curing at about 200 to 300 °C. Hence, the polysiloxane-based heat-resistant coat is advantageous in terms of workability and economy. In addition, the polysiloxane-based heat-resistant coat may be excellent in wear resistance, heat resistance, and weather resistance.

In the case of having a coating layer, a thickness of the layer is 10 µm or more, preferably 20 µm or more, 100 µm or less, preferably 50 µm or less, and usually from about 20 to 30 µm.

When a coating layer covers the inner surface of the roasting chamber, the coating layer is in contact with beans in the roasting chamber. However, this layer does not considerably affect a thermal conductivity of the carbon material roasting chamber because the layer has a maximum thickness of 100 µm or less. When the thickness of the coated layer is 50 µm or less, the porous surface of the graphite roasting chamber is sustained. Then, the far-infrared radiation inherent in graphite may be exhibited. Further, the porous surface of graphite may be expected to adsorb tar and oil which are generated and come out from coffee beans in the roasting process. This is preferable from the viewpoint of frequency of cleaning and durability of an exhaust duct connected to a roasting chamber. The coating layer having the above-mentioned range of thickness may not impair an expected effect of porosity of graphite.

Inner and/or outer surfaces of the roasting chamber made of graphite or CC composite may be optionally subjected to a mirror-processing treatment. A mirror-processed surface enhances durability against scratches. Surfaces of the roasting chamber can undergo a mirror-processing treatment in place of, or in addition to a coating layer formed on the surface.

A size of the roasting chamber is appropriately selected according to a type of roasting chamber included in the roaster or roasting machine and an amount of substance to be roasted at one time (i.e. batch size).

A wall of the roasting chamber made of carbon material becomes thicker, radiation of far-infrared rays increases. However, a thick wall causes extension of the roasting time and an increase of necessary thermal energy to emit far-infrared rays. Therefore, an appropriate thickness is chosen from the range of usually 2 to 10 mm, preferably 3 to 7 mm, more preferably 3 to 5 mm, in order to attain a desirable strength of the roasting chamber.

A roasting chamber may be defined by either a container or a drum. The container type roasting chamber includes a container body having an opening at its top, a rectangular or circular bottom, and side wall between the top and bottom. The drum type roasting chamber has a cylindrical body having a longitudinal axis and a circular or polygonal cross section which is a cut perpendicular to the longitudinal axis.

In a preferable configuration of the container type roasting chamber, a closure member which closes the opening of the container body may be assembled. The closure member may be made of either a carbon material like a container body, or a material other than carbon material, such as glass. A glass closure member (or glass lid) enables a user to observe and monitor a state of substance in the container, which is useful. A combination of a carbon material closure member with a container body makes up a roasting chamber made of carbon material entirely. In this combination, an enhanced far-infrared effect may be expected.

A closure member used in combination with a container body may have an opening at a proper position of the closure member or a notched portion at the peripheral edge of the closure member to achieve ventilation through the opening or the notched portion. A preferable example of the closure member has an opening near the center of the closure member to achieve the ventilation. The opening can be used to monitor the inside of the container body.

In a drum type roasting chamber, a rotatable cylindrical body is commonly disposed horizontally so that the longitudinal direction is parallel to the ground. A stationary cylindrical body may be disposed upright (vertically).

The rotatable cylindrical body may have any configuration with respect to both distal ends of the cylindrical body, depending on the heating type and driving mechanism of the drum: for example, open at both side ends of the cylindrical body; open at one end and close at the other end; or close at both distal ends of the cylindrical body but one of the ends being closed by an openable or detachable closure member.

In case that the drum type roasting chamber is adopted to a hot air heating type roasting machine or a roasting machine utilizing airflow as a stirring means, the cylindrical body has an opening at least one end, or a perforated wall or lid at one end of the cylindrical body so that the hot air or airflow can enter into the cylindrical body through the opening or the perforated wall or lid of the one end.

In one configuration, when the drum type roasting chamber is housed in a casing, the other open end of the cylindrical body may be connected to the casing via inlet/outlet for beans and an exhaust duct of hot air which are provided with the casing.

In another configuration, when a roasting machine that utilizes an airflow as a stirring means, the other end of the cylindrical body is preferably closed by a removal closure member or a wall of the casing that houses the cylindrical body. In this case, the interior of the cylindrical body can be a closed area during roasting period, which is preferable.

According to an embodiment of a direct-heating type roasting machine, a common drum-shaped roasting chamber may be configured by either a cylindrical body having fixed walls at both longitudinal distal ends, or a cylindrical body having a fixed wall at one end and a removal closure member at the other end.

The peripheral surface of the cylindrical body may have an opening which serves as a vent or an inlet/outlet for beans, according to needs. The inlet/outlet can be closed with an openable cover, preferably a transparent cover made of glass. This makes it possible to observe a state of beans in the roasting chamber during roasting. In the configuration of the cylindrical body having a fixed wall at one end and a removal closure member at the other end, beans can be charged and discharged through this open end by removing the closure member.

According to the embodiment of the drum type roasting machine including a rotatable cylindrical body, the roasting machine comprises a driving mechanism for rotating the cylindrical body. The driving mechanism may comprise a rotation transmission means such as a rotational shaft, a pulley or gear which transmit forces from an electric motor. The rotational shaft may be inserted in the cylindrical body. The electric motor may be connected to the fixed wall of the cylindrical body or the closure member.

According to the invention, the roasting machine may further comprise a stirring member for tumbling a substance (beans) contained in the roasting chamber.

Examples of the stirring member include a stirring propeller which agitates the beans by its rotation, and a stirring rod attached on an inner wall surface of the roasting chamber. An appropriate stirring member is selected according to the shape or configuration of the roasting chamber, heating method, and so on. In the case of a container type roasting chamber, a stirring propeller is usually mounted on the bottom surface of the container body. In the case of a drum-shaped roasting chamber, a stirring rod is usually attached to the inner surface of the cylindrical body. The stirring rod may be adhered to an inner surface with a carbon cement, or may be formed in a molding or cutting process in production of the cylindrical body.

In a relatively small-scale roasting machine which utilizes airflow, the airflow can tumble beans within the roasting chamber, and therefore an optional stirring member is not required.

In any roasting machine including the roasting chamber having a configuration as mentioned above, a heating method for heating the roasting chamber is not particularly limited, but includes a direct heating, a hot air heating that heats by blowing hot air into the roasting chamber, and a semi-hot air heating which is a combination of hot air heating and direct heating. The direct heating method is not limited to a direct flame type in which flame contacts the roasting chamber directly. An electric infrared heater such as an infrared heater, a halogen heater, or a carbon heater or induction heating (IH) may be used for a heating device. Further, carbon material which is a material of the roasting chamber may be used as a far-infrared heating element such as graphite heater because the carbon material can emit heat energy due to its electric resistance resulting from the flow of electricity. The heating method can be appropriately selected according to the size and structure of the roasting chamber, power source and facilities around the location of the roasting machine.

According to one embodiment, a hot air-heating type or semi-hot air-heating type roasting machine preferably comprises a hot air generator, a gas combustion chamber, a blower for blowing combustion gas.

According to the invention, a container type roasting chamber comprising of a container body and a closure member may be used alone as a roaster for home roasting. The home roasting may be conducted with a gas burner stove, an IH stove, or an electric heater. However, in a preferable embodiment, a roaster further comprising a heater in addition to a container type roasting chamber in order to avoid variations in heating power due to size and type of heat source.

In some embodiments of a roasting machine, a gas stove, a gas combustion chamber, a heater, a heating coil for induction, or the like may be selected for a heater, depending on the type of power source. In this connection, the roasting machine may comprise an electric outlet, a gas pipeline joint, an electric circuit, a control circuit, and the like in order to connect to the power source. The roasting machine may further comprise a control unit which controls a heater and its heat level. The roasting time and temperature can be controlled under a programmed control unit. According to this roasting machine, a roasting process is automatically time and temperature controlled by a programmed control unit.

In some embodiments of a drum type roasting machine having a rotatable cylindrical body, the roasting machine preferably comprises a drive unit for rotation such as an electric motor and its controller, and a casing for housing them. In the case of a roasting machine having a stationary roasting chamber, it is preferred that the roasting chamber is coupled to an airflow generator that generates an air-flow towards the roasting chamber.

In some embodiments of an industrial roasting machine, the roasting machine may optionally comprise a storage hopper from which unroasted beans are conveyed into the roasting chamber, a chute for discharging the roasted beans into a cooling tank, a damper for adjusting exhaust gas amount, a cooling device for cooling roasted beans, a cyclone for separating and removing chafus and the like, an afterburner for separating and removing uncarbonized substances, an intake duct, an exhaust duct, an air blower and the like. In one embodiment, these devices are assembled to constitute a roasting apparatus.

As previously described, since a roasting chamber made of a carbon material which has a high thermal conductivity, a roasting cycle consisting of a preheating time of the roasting chamber, an appropriate roasting period and cooling time of the roasting chamber can be shortened in cycle time in the case of a roasting machine of the invention, as compared with a roasting operation with use of a conventional roasting machine. Further, a roasting chamber made of carbon material emits far-infrared rays (electromagnetic waves having a wavelength of 3 to 100 µm, preferably 3 to 50 µm) as the roasting chamber is heated. Far-infrared rays are readily reflected by metals and readily absorbed by other substances. However, the roasting chamber itself emits far-infrared rays in the roaster/roasting machine of the invention, thus the emitted far-infrared rays can directly reach a substance to be roasted such as unroasted beans. For this reason, the emitted far-infrared rays can be utilized more effectively as compared with a roaster/roasting machine which comprises a far-infrared heater disposed around the container body or cylindrical body as a roasting chamber.

Even if a substance to be roasted is bulky and has a multilayered structure like a green coffee bean, far-infrared rays can reach the core through the pores of the substance (bean). So, the core can be heated without overheating the surface (skin) of the bean. In general, a given energy varies in the position or condition of beans in the roasting chamber, and a bean in contact with the bottom surface of the roasting chamber differs from a bean in contact with the side wall in a given energy. However, since the roasting chamber made of carbon material contributes reduction of the difference in heat energy given to the beans, influence of the difference in heat power and variation of heat adjustment may be reduced. As a result, the difference in roasted level may be suppressed in batches of the roasted product.

The characteristic flavor of roasted beans may be obtained by sufficient evaporation of water contained in green beans and chemical reactions during roasting process. Roasting causes a decrease in amount of rich components found in a green bean, such as proteins, fats, chlorogenic acid in the case of coffee beans, and sucrose. On the other hand, the amount of various organic acids or a like flavor or aroma relevant components is increased in the roasted beans. However, the chemical reaction in a coffee bean may proceed through its own exothermic reaction after first crack. Thus, a temperature control for preventing too much rise in chamber temperature is significantly important because flavor of roasted beans is greatly affected by too much rise in temperature caused from the excessive proceeding of the reaction. For this reason, a coffee roasting expert manually controls exhaust gas amount in a damper and airflow in a duct to adjust heat level and airflow while meticulously checking not only appearance (e.g., color) but also sound and scent based on his knowledge and experience in the field, thereby accomplishing to obtain a desired flavor. However, roasting with use of the roaster/roasting machine of the present invention may produce uniformly roasted beans whose core is properly heated to assure taste as good as a roasting expert's product, despite not precisely adjusting heating temperature.

In addition, the roasting chamber made of carbon material can emit far-infrared rays with stability during the roasting period and its emission can be sustainable and durable for many years. This is advantageous as compared to a conventional roasting chamber which has a coating layer containing far infrared ray-emitting substance, on the inner surface of the roasting chamber. Therefore, the roaster/roasting machine capable of exerting a durable far-infrared emission is considerably suitable for a professional roasting machine.

According to another aspect of the invention, a method for roasting beans is provided. The method comprises contacting beans with heated graphite. This method may be carried out with use of a roaster/roasting machine of the invention, which includes a graphite roasting chamber. In the method of the invention, a container type or a drum type roasting machine may be used. Further, a heating source for roasting is not particularly limited, and any types of heat source and heater may be used for heating the graphite. The roasting method of the invention is suitable for roasting beans, especially beans such as green coffee beans, each of which is hard and has a multilayered structure. In general, it is difficult to roast such green coffee beans until the core is heated without scorching the surface. However, the roasting method of the invention may achieve to heat the core evenly by a radiant heat of far-infrared ray emitted from the graphite in addition to heat conduction from the heated roasting chamber (container body or cylindrical body).

Next, a variety of embodiments of a roaster or a roasting machine of the invention will be described with reference to accompanied drawings, based on roasting chamber types. Nonlimiting examples of a substance to be roasted is a bean, but a bean (in particular coffee bean) as a representative of the substance is employed in the following descriptions.

### [First Embodiment]

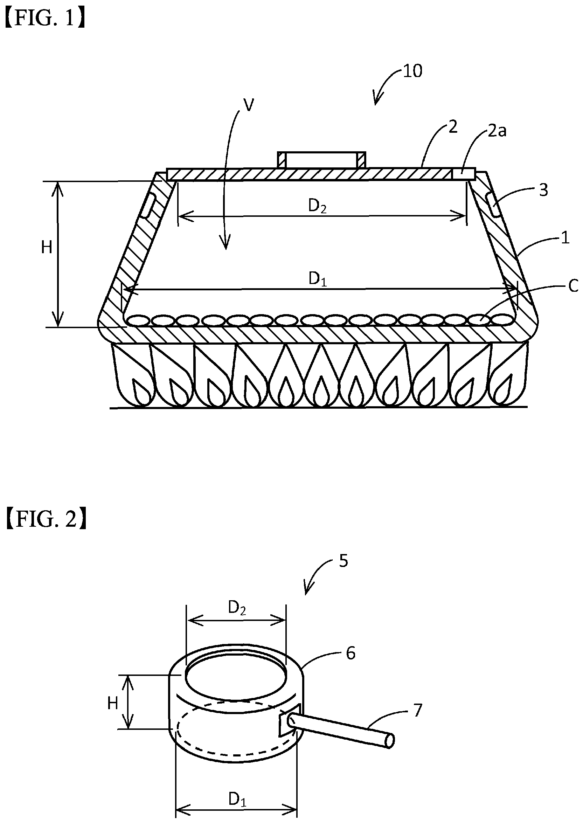

According to the invention, a first embodiment of the roaster is a container-type roaster which includes a container body having an opening at its top (open top container body) which serves as a roasting chamber, for example, as shown in FIGS. 1 to 4.

According to a first embodiment, the open top container body may have a circular or quadrangular bottom, and a side wall between top and bottom.

In a configuration of the open top container body, the opening at the top has a diameter or one side length (D2) which may be smaller than or equal to the diameter or one side length (Di) of the circular or quadrangular bottom of the container body.

The opening may be kept open when roasting beans contained in the container body. Alternatively, a closure member such as lid may be placed on the opening during roasting. The closure member may be made of either carbon material or a material other than carbon material such as glass. The carbon material used for the closure member may be identical to or different from the carbon material used for the container body. A continuous observation of appearance (e.g., color) of beans in the container body is allowed through the glass lid during roasting.

FIG. 1 shows a container type roaster 10. The roaster 10 is composed of a combination of container body 1 as a storage portion for beans (depicted "c" in FIG. 1), and a lid 2 as a closure member for closing the opening of the open top container body 1.

Container body 1 is made of carbon material entirely and is frustum of cone in shape, which is gradually decreased from the bottom to the top in diameter of the circle. Container body 1 has recessed portion 3 responsible for a handle, slightly upper position on the outer surface of the side wall of container body 1.

Container body 1 has a size of the bottom well fitted to allow the entire bottom to be direct contact with flame of a burner or stove. Therefore, the diameter D₁ of a circular bottom is determined depending on the size of stove or burner as a heater and is appropriately selected within the range of about 80 to 260 mm.

The size of the opening at the top depends on the bottom size, but is usually determined so that the ratio of the bottom diameter (Di) to the opening diameter (D₂), D₁: D₂, is between about 10 : 8 and 10 : 5. A batch of beans c are spread over the bottom surface of the container body to come into contact the bottom surface. Therefore, a preferable bottom size is around the size of flame in burner or stove, or size of a coil in IH. A smaller opening at the top of an open top container body is better from the viewpoint of convection efficiency. A preferable height H is in the range of about 80 to 200 mm. A preferable ratio of the bottom diameter (Di) to the height (H), D₁: H, is between 1 : 1 and 3 : 1 from the viewpoint of stability when placed on a stove.

Lid 2 is placed on the opening at the top of container body 1 to create a closed area V where radiant heat can be effectively utilized. A part of the peripheral edge of lid 2 of roaster 10 is notched, and the notched portion 2a may be responsible for ventilation of steam generated from the heated beans c due to evaporation of the water contained in the beans.

Container body 1 may have a protrusion on its upper edge so that the notched portion 2a is closable by altering its position relative to the upper edge of container body 1.

Roaster 10, which has an above-mentioned configuration and is referred to as "pot-type roaster", is used for home roasting mainly for a personal consumption. As shown in FIG. 1, roaster 10 may be used in a way that the bottom of container body 1 is placed on a gas stove or IH stove to be directly heated, thereby roasting beans.

A handle of a roaster is not limited to recessed portion 3 formed on the side wall of container body 1. A handle may be mounted on the side wall of container body 1 in another configuration of pot-type roaster 10. The handle may be in any shape and made of a non-limited material. A preferable material for the handle is a material having a low thermal conductivity such as carbon fiber reinforced plastic and wood.

A single handle being gripped with one hand may be adopted to a handle. In an exemplary roaster having a bottom surface size (Di) of about 60 to 150 mm, a single handle 7 may be mounted on the side wall of container body 6, like a roaster 5 shown in FIG.2.

Referring to ventilation, a closure member (lid) has an opening in any position of the lid in another configuration of a roaster, despite that a notched portion in the lid serves as a vent 2a in roaster 10 shown in FIG. 1.

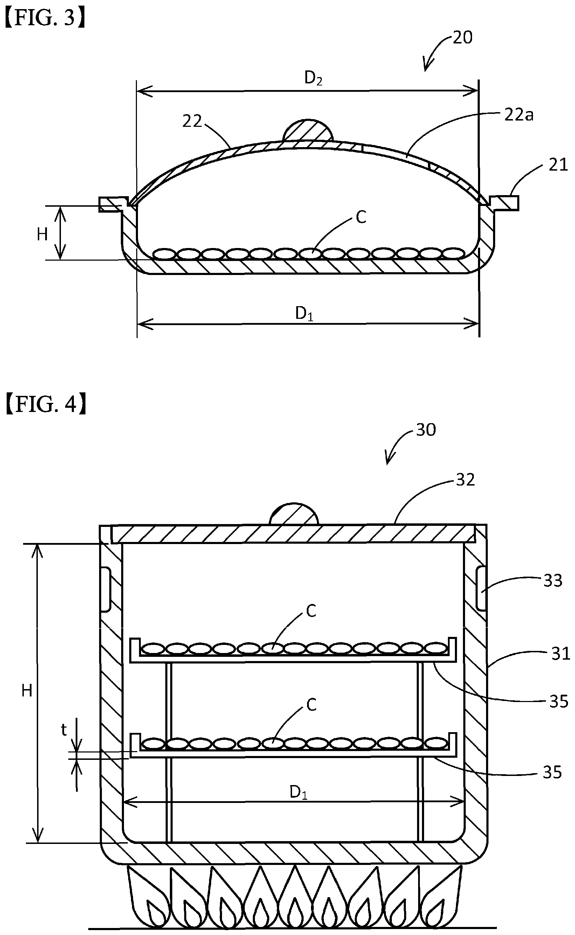

FIG. 3 shows another container type roaster 20. This roaster 20 is a combination of tray-shaped container body 21 constituting a roasting chamber, and lid 22 as a closure member. Tray-shaped container body 21 has a height H ranging from about one-half to one third size of diameter (in the case of circular bottom) or one side length (in the case of quadrangular bottom) of the container body. Lid 22 has an opening 22a for ventilation. The dimension of the opening is not particularly limited, but the opening's area preferably ranges from about 1/10 to 1/3 of the entire area of the lid. A relatively small opening formed on the lid may serve as a vent, while an opening with a diameter of 2 cm or more may serve as a viewing window for observing a state of beans in the container body. In the case of a graphite lid, an opening responsible for a viewing window is useful for checking a roasting state of beans contained in the roasting chamber without removing the lid. Further, an opening having an appropriate size for viewing window would not impair radiant heat generated from the carbon material roasting chamber.

Roaster 20 is a small- to medium-sized roaster comprising a container body whose height (H) is between about 50 and 200 mm and size D₁ (diameter or one side length of its bottom) is between 100 and 300 mm. Such small- to medium-sized roaster is suitable for roasting at home or in a cafe.

In a configuration of tray-shaped container body 21, its upper surface size D₂ is equal to or slightly larger than its bottom size D₁, and its height (H) is lower than its bottom size D₁. Based on this configuration, tray-shaped container body 21 may secure more stable state when being placed on a stove, as compared to a pot-type roaster. Roaster 20 has a relatively large opening (size: D₂) at its top, however, a desired heating effect given by radiant heat may be obtained due to its relatively small height of container body 21 constituting the roasting chamber.

A roaster including a tray-shaped roasting chamber is preferably used to be heated by a relatively large gas stove. Also, a tray-shaped roasting chamber may be combined with a heat source such as gas burner, an electric heater or an IH. Such heat source may be mounted on the bottom of the tray-shaped roasting chamber. An appropriate number of beans to be roasted will depend on the bottom size of the container body. So, the bigger bottom of the tray, the more beans can be roasted at one time. Thus, the roaster having a tray-shaped roasting chamber may be used as a professional roasting machine used in a specialty coffeeshop and the like.

In roaster 10 or 20 having a configuration shown in FIGS. 1 or 3 respectively, unroasted beans such as green coffee beans c are spread over the bottom surfaces of container body 1, 21 in the respective roaster 10, 20, and the lid 2, 22 is placed on the opening at the top of the respective container body, to create a closed roasting chamber.

The container type roaster is suitable for being heated at the bottom of the container by a gas stove, an electric heating stove, an IH stove, or the like. Container body 1, 21 is set in a way that entire bottom surface of the container body is contact with flame despite of types of heaters.

If necessary, a container may be preheated to a predetermined temperature until unroasted beans are charged into the container body. In general, green coffee beans are put into a container body having a temperature of about 100 to 150 °C, and roasting process starts.

In the case of a container type roaster/roasting machine having an above-mentioned configuration, stirring beans or shaking the container body during roasting period is not required. The roaster of the invention enables unroasted beans to be heated by far-infrared rays radiated from the carbon material container body in addition to heat conduction from the container body, so that the core as well as hull of a bean can be evenly heated without burning the hull of the bean. The roasting time (heating time) is appropriately determined according to a type of heating source, a desired roasting level, and a substance to be roasted such as coffee bean species.

Shaking a container during roasting is allowed. For example, if roaster 5 shown in FIG. 2 is used, roaster 5 may be shaken by moving handle 7 during roasting. If the number of beans to be roasted at one time is larger than the number of beans capable of being spread over the bottom of a roaster, the roaster is properly shaken, thereby more beans are allowed to contact with the carbon material bottom. Thus, uniformly roasting may be achieved.

In another embodiment of a roaster, a container body has a height H larger than size of the bottom, and a stacking shelf is placed within the container body. This embodiment of a roaster enables to increase the number of beans to be roasted at one time without stirring or shaking operation.

FIG. 4 shows roaster 30 as one example. Roaster 30 comprises an open top container body 31 which has a circular or square bottom and has a height H of twice to trice of the bottom size D₁ (diameter D or one side length L).

The opening of container body 31 at its top is closable with lid 32 as a closure member. Recessed portion 33 on the peripheral wall of container body 31 is responsible for a handle.

In container body 31 serving as a roasting chamber, two shelf boards 35 each having legs stack vertically to make up two shelves. Shelf board 35 is made of a carbon material which is identical to or different from that of container body 31. For example, a graphite container body 31 may be combined with shelf board 35 made of CC composite. CC composite shelf board is preferred due to its lightweight and high strength from the viewpoint of frequent putting in/taking out operations.

Shelf board 35 has almost equal in size of the bottom of container body 31. The thickness (t) of shelf board 35 is selected according to a constituent material of the shelf board. An appropriate thickness is in the range of about 1 to 10 mm for CC composite plate, and in the range of about 3 to 20 mm for a graphite plate.

The roaster illustrated in FIG. 4 having two shelves, but the number of shelves is not limited. In another example, three or more boards may stack depending on the height H of container body 31 and length of the leg of shelf board 35. Since each shelf board 35 has beans spread almost evenly, the total number of beans on shelves becomes twice or trice depending on the number of shelf board 35, as compared with the case where only bottom has spread beans. Since all elements of the roasting chamber (container body, lid, and stacked boards) are made of carbon material, beans placed on any board can be heated by radiation heat even in the case of direct heating method. In addition, since no shelf boards 35 are in direct contact with the bottom of container body 31, beans on shelf board 35 are positioned in the space of the roasting chamber. Therefore, the beans are heated mainly by radiant heat and evenly heated despite of their positions (first shelf board or second shelf board).

As described above, roaster 30 comprising boards which are stacked to make up a shelf is effective for an increase in number of beans roasted at one time with respect to the size of gas stove of a heating source. In order to shorten the roasting time, shelf board 35 may be placed in a preheated container body.

### [Second Embodiment]

According to a second embodiment, a roasting machine further comprises a stirring member in combination with a container type roasting chamber.

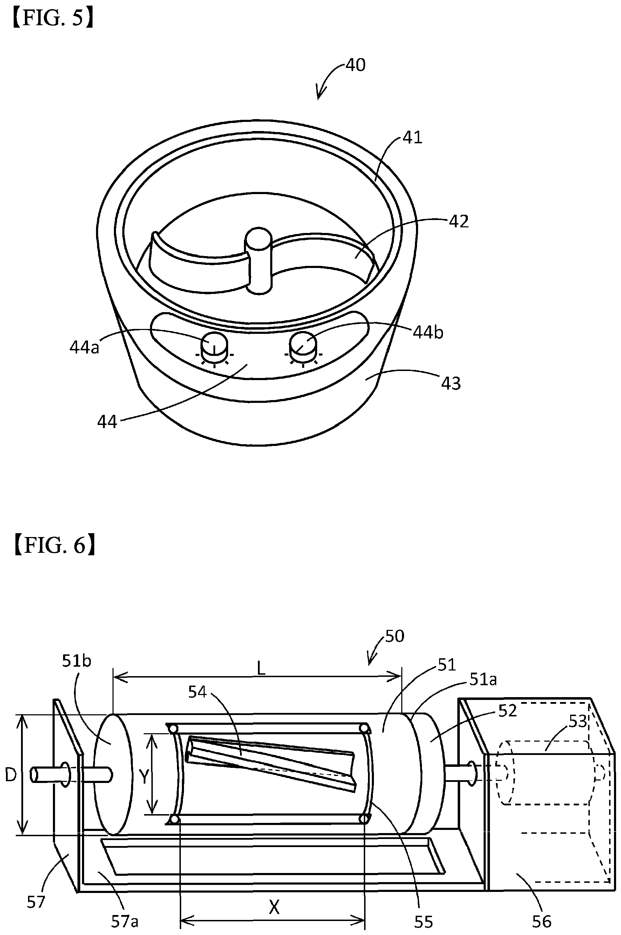

In one configuration, as shown in FIG. 5, a roasting machine 40 comprises a stirring propeller 42 mounted on the bottom of an open-top container body 41 which is a roasting chamber made of a carbon material. Stirring propeller 42 is rotated by an electric motor. The motor and a heat source (e.g., heater and IH coil) for heating container body 41 are housed in a casing 43.

The inner surface of container body 41 may be coated with a glass-like carbon coat, a pyrolytic carbon coat, a ceramic coat, a glass coat, a polysiloxane-based heat-resistant coat, or the like, and is preferably coated with a polysiloxane-based heat-resistant coat. The inner surface of container body 41 is subjected to frictional sliding of beans during roasting process, however, the coating layer may prevent abrasion of carbon material of container body 41.

The opening at the top of container body 41 may be closed with a lid as a closure member, like roasting machines shown in FIGS. 1 and 3. The closure member is not an essential element of a container type roaster, however, an assembly of an open top container body and a closure member for closing the opening is preferable. The closure member may be made of a same kind of carbon material as the container body, or made of a glass. The closure member may have an opening in any position or be notched on the peripheral edge for ventilation.

In one configuration, a roaster comprises an operation panel 44 which includes a timer for setting a roasting time, operating knobs 44a, 44b of a controller for adjusting a temperature, stirring speed, and the like. The kind of operations are appropriately determined depending on a heat source type and an installed roasting profile program.

According to the second embodiment, a batch size is increased as compared to a batch size of the roaster of the first embodiment. This is because a batch of beans contained in container body 41 corresponds to an amount capable of being agitated by the stirring propeller, while a batch of beans in the first embodiment is limited to an amount spread over the bottom surface in a container body.

After charging beans into container, proper conditions are set with operation knobs 44a and 44b on operation panel 44 so as to finish a desired roasting level.

Container body 41 is heated by a heat source, stirring propeller 42 is rotated by the motor to agitate beans during roasting. If necessary, container body 41 is preheated to reach a predetermined temperature, and thereafter, unroasted beans may be charged.

### [Third Embodiment]

According to a third embodiment of a roasting machine, the roasting machine is a direct heating type roasting machine and comprises a rotatable cylindrical body serving as a drum-shaped roasting chamber. The roasting chamber is characterized by using a cylindrical body made of a carbon material having a bulk density of 1.2 to 2.2 g / cm³ and a thermal conductivity of 60 to 200 W/m · K at 25 °C. The roasting machine is usually distributed as a direct-heating type roasting machine either for personal consumption (common batch amount of 100 to 500 g) or for specialty coffee-shop (common batch amount of 300 g to 5 kg).

The roasting chamber made of carbon material is a cylindrical body which has a circular or polygonal (e.g., square, hexagon, and octagon) cross section perpendicular to the longitudinal direction of the cylindrical body. A diameter or length of one longitudinal distal end of the cylindrical body is appropriately determined from the range of 100 to 300 mm, and the height (longitudinal length) of the cylindrical body is determined from the range of about 150 to 350 mm, according to a desired batch amount. A thickness of wall of the cylindrical body may be appropriately determined from the range of about 2 to 5 mm. Such range of thickness can assure a necessary strength of the cylindrical body. On the contrary, an unduly thick wall takes time to heat the cylindrical body up to a predetermined temperature.

The drum-shaped roasting chamber is disposed horizontally and parallel to the ground so that the cylindrical body rotates around its longitudinal axis during being heated.

The inner and outer surfaces of the cylindrical body may be coated with a ceramic coat, a glass coat, a polysiloxane-based heat-resistant coat, or the like. The inner surface of the cylindrical body is subjected to frictional sliding of beans during roasting process, however, the coating layer may prevent abrasion of carbon material of the drum.

The drum-shaped roasting chamber comprises a cylindrical body, and a first opening at one distal end and a second opening at the other distal end of the cylindrical body. In one configuration, first and second openings are closed by a removal or openable closure member such as a lid. In another configuration, a first opening is closed by a fixed wall and a second opening is closed by a removal or openable closure member such as lid. The closure member may be made of either a carbon material or a metal. Either one end is preferably made of a metal because a motor or transmission mechanism (e.g., gear and pulley) for rotating the cylindrical body can be connected to the metallic end.

When an open end of the drum-shaped chamber is closed with a removable or openable closure member, the open end may be used as an inlet for unroasted beans and/or outlet for roasted beans.

In some configurations, the cylindrical body have an opening on its peripheral surface between one and the other ends for ventilation or an inlet/outlet for beans, according to needs. In the case of having an opening for an inlet/outlet, the inlet/outlet may be closed with an openable transparent cover such as a glass plate. A user may monitor a state of beans contained in the roasting chamber through the transparent cover with eyes during roasting period.

According to a third embodiment, a roasting machine preferably further comprises a heating member. The heating member is usually sized to fit the drum-shaped roasting chamber, and is housed together with the roasting chamber and a rotation mechanism, in a housing.

As the heating member, a gas burner which directly heats by a flame, an infrared heater, an electrothermal wire heater and a like heater may be employed.

FIG. 6 shows an example of a direct-heating type roasting machine 50 comprising a drum-shaped roasting chamber.

In a configuration of roasting machine 50 shown in Fig.6, the drum-shaped roasting chamber include a cylindrical body 51 with an opening at one end 51a and a wall fixed at one end 51b, and a removal closure member 52 at the open end 51a of cylindrical body 51. A motor for rotating cylindrical body 51 is connected to closure member 52. Cylindrical body 51 has an inlet/outlet 55 for charging/discharging beans on the peripheral wall of cylindrical body 51. Inlet/outlet 55 is normally closed with a glassy window so that the interior of cylindrical body 51 can be observed.

A motor 53 has a rotational shaft which may extend from closure member 52 to closed end 51b of cylindrical body 51. Alternatively, motor 53 may be fixedly connected to closure member 52 via pivot of its rotational shaft.

A stirring rod 54 having an L-shaped cross section is erected on the inner surface of cylindrical body 51, such that a longitudinal direction of stirring rod 54 extends with an angle (oblique) with respect to a longitudinal axis of cylindrical body 51. Stirring rod 54 can obstruct tumbling of beans caused by rotation of the drum-shaped roasting chamber, thereby the beans can be can be stirred in the roasting chamber.

Motor 53 is supported by a casing 56 which includes a supporting member 57 having a frame 57a at its bottom. Frame 57a is placed on a stove or a like heating source, the peripheral wall of cylindrical body 51 can be heated.

In Fig. 6, supporting member 57 supports both ends of cylindrical body 51. In alternative configuration, supporting member 57 may further include a cover having a U-shaped cross section which covers an upper half peripheral wall of cylindrical body 51.

A roasting machine comprising cylindrical body 51 serving as a rotatable drum-shaped roasting chamber may be used like a conventional direct heating type roasting machine including a metallic drum. Cylindrical body 51 rotates and is heated by flame directly. In the case of a roasting machine having a configuration shown in FIG. 6, frame 57a is placed on a burner or a stove having an electrothermal heater so as to heat the cylindrical body as it rotates. A preferable burner is a U-shaped or I-shaped burner having a length fit to the longitudinal length of the cylindrical body.

If necessary, cylindrical body 51 may be preheated. In this case, preheated cylindrical body 51 stops rotating, and then unroasted beans are charged into cylindrical body 51 through inlet 55. Thereafter, inlet 55 is closed, and cylindrical body 51 re-starts to rotate and be heated.

According to a third embodiment, a heating member such as an electric heater or a tabletop stove may be optionally included, despite that a heating means is not shown in FIG.6. The heating member may be integrally assembled with supporting member 57.

In an example of a roasting machine comprising a heating member, a combination of casing 56 and supporting member 57 may be replaced with a housing which accommodates cylindrical body 51, a motor, a heating member and other members so as to support them. A roasting machine may further comprise a thermometer (e.g., infrared sensor or a thermostat) for roasting chamber's temperature, and a control unit for controlling a thermal power and running time of the heating member.

In some configurations of a roasting machine shown in FIG. 6, one stirring rod having an L-shaped cross section may be replaced with, for example, a plurality of stirring rods which may be attached to the inner surface of cylindrical body 51, or a helical rod which may be attached so as to form a spiral from one distal end to the opposite distal end along the inner surface of cylindrical body 51.

In the case of a roasting machine having an above-mentioned configuration, a user may monitor a roasting state by observing appearance of beans through inlet/outlet 55, and reduce heating power immediately after listening to bean's crack sound. Controlling heating power based on monitoring by eye tends to increase variation in roasting level between roasting batches. However, since a roasting machine of the invention can heat a core of bean from an early stage of roasting process by far-infrared ray emitted from carbon material of the roasting chamber, variation in the roasting level between batches may be reduced. This means that a desired flavor may be obtained even if the heating power is adjusted based on bean's crack sound and appearance (color) during roasting. According to the invention, the embodiment of a direct heating type roasting machine may achieve a satisfactory roasting even under a routine automatic control.

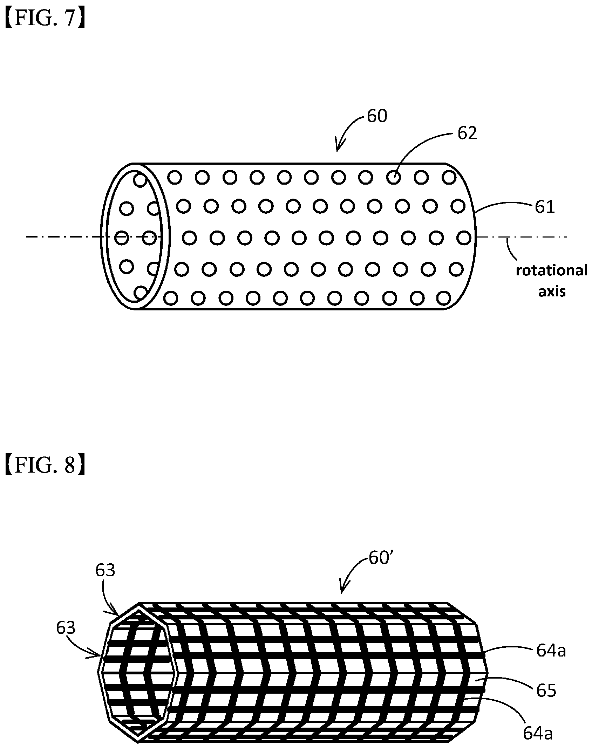

Cylindrical body 51 does not have a ventilation hole on the peripheral wall thereof, however, in another configuration, a cylindrical body may have an opening for ventilation on the peripheral wall of the cylindrical body, like a roasting chamber 60 (FIG. 7) or a roasting chamber 60' (FIG. 8)

Roasting chamber 60 includes a cylindrical body 61 having a plurality of openings on its peripheral wall, which serves as a vent 62. Roasting chamber 60' includes an octagonal prism-shaped body composed of eight CC composite plates 63. CC composite plate 63 comprises a base fabric of carbon fiber woven fabric, and a gap 65 between fibers 64a and 64a of the fabric is responsible for a vent in roasting chamber 60'.

### [Fourth Embodiment]

According to a fourth embodiment, a roasting machine is a hot air heating type or semi-hot air heating type roasting machine including a rotatable cylindrical body made of a carbon material, and is suitable for the use in a production facility. In a fourth embodiment, a roasting machine comprises a drum-shaped roasting chamber through which hot air passes; a hot air generating unit that blows hot air into the drum-shaped roasting chamber; and a rotating mechanism for rotating the drum-shaped roasting chamber. This roasting machine can be used for roasting 1 kg, 5 kg, 10 kg, 30 kg, 50 kg, 60 kg, and a maximum of 100 kg of beans as a batch amount which is an amount of beans roasted at a same time. Types, strength, thickness, density, or a like property of carbon material used for the roasting chamber may be appropriately selected according to the batch amount. The cylindrical body of the drum-shaped roasting chamber is sized depending on a desired batch amount. A diameter or one side length of a circular or polygonal-shaped end in longitudinal direction of the cylindrical body is determined from the range of 100 to 500 mm. A longitudinal length of the cylindrical body is determined from the range of about 150 to 500 mm. A wall thickness of the cylindrical body is appropriately determined from the range of about 3 to 10 mm, preferably about 3 to 7 mm, and more preferably about 3 to 5 mm. This range of thickness may secure a necessary and sufficient strength of the cylindrical body. On the contrary, unduly thick wall needs a longer time to heat the roasting chamber up to a predetermined temperature.

The drum-shaped roasting chamber is made of a carbon material and includes a cylindrical body having a shape such as cylinder, cuboid, hexagonal prism, or octagonal prism. The cylindrical body is disposed horizontally in the roasting machine so that the cylindrical body rotates around its own longitudinal axis parallel to the ground while being heated.

In one configuration of the drum-shaped roasting chamber, the cylindrical body has openings at both longitudinal distal ends in order that hot air passes through the cylindrical body. In an alternative configuration, the cylindrical body has one open distal end and one closed distal end by a fixed perforated wall or a perforated lid as a removal closure member. In this configuration, hot air can enter the cylindrical body from the perforated wall or lid. In an ordinary commercial roasting machine, the open end serves as vent out and communicates with an inlet for unroasted beans, an exhaust flow path of hot air, and a chute for discharging roasted beans. In the condition that the cylindrical body is housed in a casing provided with an input/output port, the open end can selectively communicate with the input port when charging unroasting beans, with an exhaust passage during roasting operation, or with the output port when discharging roasted beans.

In common configurations, a rotational shaft driven by an electric motor is inserted into the cylindrical body in its longitudinal direction, and a rotating transmission unit such as a pulley or gear is connected to the fixed wall or the removal lid at the hot air intake side of the cylindrical body.

In a preferable configuration of a roasting chamber, a stirring rod for stirring beans may be attached to the inner surface of cylindrical body. The stirring rod may be a plate erected on the inner surface of the body and preferably is made of graphite or CC composite. In some preferable configurations, a plate-like stirring rod is erected on the inner surface to be tilted at a slight angle from the longitudinal direction of the cylindrical body or a helical rod is attached to the inner surface such that beans within the cylindrical body are spirally drawn from one end to the other end. Thereby, beans roasted in the cylindrical body can move toward the outlet side as the body rotates.

Instead of the stirring rod or together with the stirring rod, an impeller serving as a stirring member may be mounted on a rotational shaft of the cylindrical body.

The inner surface of cylindrical body may or may not be coated with a polysiloxane-based heat-resistant coat, a ceramic coat, a glass coat, a glass-like carbon coat, a pyrolytic carbon coat, or the like. When a coating material is applied, a polysiloxane-based heat-resistant coat is preferable from the viewpoint of coating workability and abrasion resistance. A thickness of a coating layer is usually from 10 µm to 100 µm, preferably from 20 to 50 µm, and more preferably from about 20 to 30 µm.

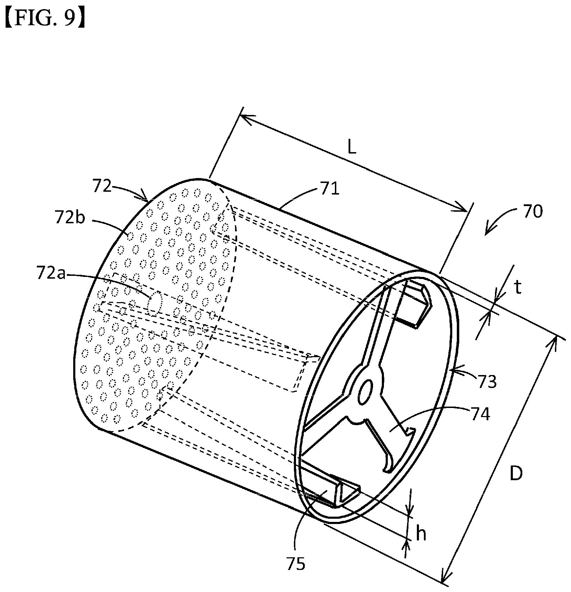

FIG. 9 shows an exemplary drum-shaped roasting chamber included in a fourth embodiment of the roasting machine.

A drum-shaped roasting chamber 70 shown in FIG. 9 is made of a carbon material having a bulk density of 1.2 to 2.2 g/cm³ and a thermal conductivity of 60 to 200 W/m · K at 25 °C, preferably graphite. Drum-shaped roasting chamber 70 includes a cylindrical body 71 having a fixed perforated wall 72 at one end thereof. Perforated wall 72 has numerous openings 72b evenly spaced apart over the entire wall and hot air can pass through the perforated wall. In addition, perforated wall 72 has an opening 72a at the center position of the wall, and a rotational shaft is inserted through the perforated wall 72. An opposite distal end 73 of cylindrical body 71 is open, and a bearing 74 is fit on the interior of the body at a slightly inner position from the open end 73.

On the inner surface of cylindrical body 71, three L-shaped plates 75 each extending in the longitudinal direction are erected as a stirring rod. The three L-shaped plates 75 are positioned diagonally to the longitudinal direction of cylindrical body 71 at equal intervals on the inner surface.

Drum-shaped roasting chambers as described above may be adopted to a hot air type roasting machine and a semi-hot air type roasting machine.

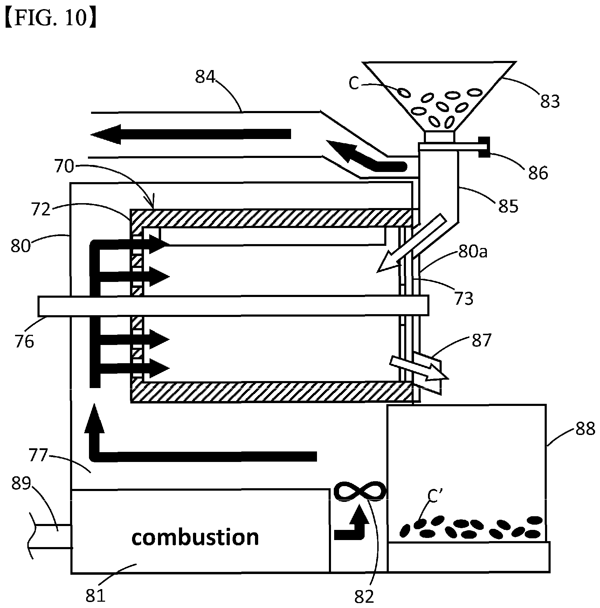

FIG. 10 is a schematic view of an exemplary configuration of a hot air heating type roasting machine in which drum-shaped roasting chamber 70 is installed. In one configuration, a combustion chamber 81 serving as a hot air generator is arranged below drum-shaped roasting chamber 70 within a housing 80 of the roasting machine. Combustion gas (hot air) generated in combustion chamber 81 flows by a blower 82 to perforated wall (intake side) 72 of drum-shaped roasting chamber 70 through a hot air passage 77. Drum-shaped roasting chamber 70 is rotated by an electric motor (not shown) which is directly or indirectly connected to one distal end of a rotational shaft 76 that is inserted through drum-shaped roasting chamber 70.

The other end 73 of the drum-shaped roasting chamber 70 may communicate with a front door 80a of housing 80. Front door 80a is provided with an inlet for charging unroasted beans c and an outlet for discharging roasted beans. The inlet is connected to a hopper 83 and an exhaust duct 84 via a same passage 85. Connecting the passage 85 either to hopper 83 or to exhaust duct 84 can be chosen by moving a lever 86.

The outlet is located below front door 80a, and chute 87 is connected to the outlet which is openable and closable with a shutter (not shown). The shutter may be opened after roasting so that the roasted product can be discharged through chute 87 to a cooling tank 88 installed in front of the housing 80. Roasted product c' discharged to a cooling tank 88 is cooled by a cooling fan (not shown).

A temperature of drum-shaped roasting chamber 70 or hot air is monitored by a temperature sensor (not shown) mounted near drum-shaped roasting chamber 70.

A hot air heating type roasting machine including a drum-shaped roasting chamber of the invention can be operated in the same manner as a conventional hot air heating type commercial roasting machine. That is, a heat source is switched on and an electric motor for rotating drum-shaped roasting chamber 70 is switched on, and drum-shaped roasting chamber 70 is preheated. The drum-shaped roasting chamber is preheated to reach a predetermined temperature, a flow path is switched to hopper 83 side with use of lever 86, and thereby green coffee beans c stored in hopper 83 are charged into the drum-shaped roasting chamber. After the green coffee beans are charged in the roasting chamber, the flow path is switched to exhaust duct 84 side again by moving lever 86 to start roasting. A temperature of the drum-shaped roasting chamber or hot air is monitored during roasting process. When the temperature reaches a predetermined temperature, an amount of hot air flowing into the combustion chamber is reduced by adjusting an amount of air passing through gas supply duct 89 and blower 82. When beans contained in the drum-shaped roasting chamber are roasted to a desired roasting level, combustion within combustion chamber 81 is terminated, and the resulting roasted beans c' are discharged through chute 87 to cooling tank 88, where the roasted beans c' are cooled with a fan in cooling tank 88.

According to the invention, a roasting machine of the invention is characterized by a drum-shaped roasting chamber made of a carbon material. A variety of modifications and variations are contemplated with respect to configuration of a roasting machine depending on a heat source type, size, installation location, and the like. For example, a front door may have a small port in the case of a manually controlled roasting machine, so that some beans are taken out through the port for checking a roasted level of the beans anytime. In order to operate under automatic control from a start to an end of a roasting process, a roasting machine may comprise a control unit for controlling a thermostat, blower, and exhaust duct linked to a temperature sensor, and a display for operation of the control unit. In another example, a cyclone that separates and removes chaff and the like from exhaust gas, an afterburner that separates and removes unburned substances may be optionally included according to needs.

The roasting machine having a configuration shown in FIG. 10 has only one exhaust duct, but may further comprise an exhaust duct for exhausting air from the cooling tank. In this case, the roasting machine includes two exhaust ducts.

According to a roasting machine of the invention, beans are heated while being contact with carbon material surface of the roasting chamber. Therefore, beans in a roasting chamber maybe directly heated by far-infrared rays emitted from the heated roasting chamber. This can reduce an influence of ambient temperature and humidity on heating power, and reduce variations in heating level of beans. Therefore, even if a roasting process is automatically controlled to determine a timing of discharging roasted beans under a programmed roasting profile, difference in roasted level of roasted beans as well as difference between baches of the produced roasted beans may be reduced. This performance may be competitive to a performance controlled by meticulously checking beans by an expert.

### [Fifth Embodiment]

A roasting machine of a fifth embodiment utilizes a thermal energy of carbon material (preferably graphite) which is a constituting material of a roasting chamber. Since carbon material may generate a thermal energy due to its electrical resistance characteristics when electric power is applied. The thermal energy generated from the roasting chamber may be used as a heating source, together with or in place of flame and hot air.

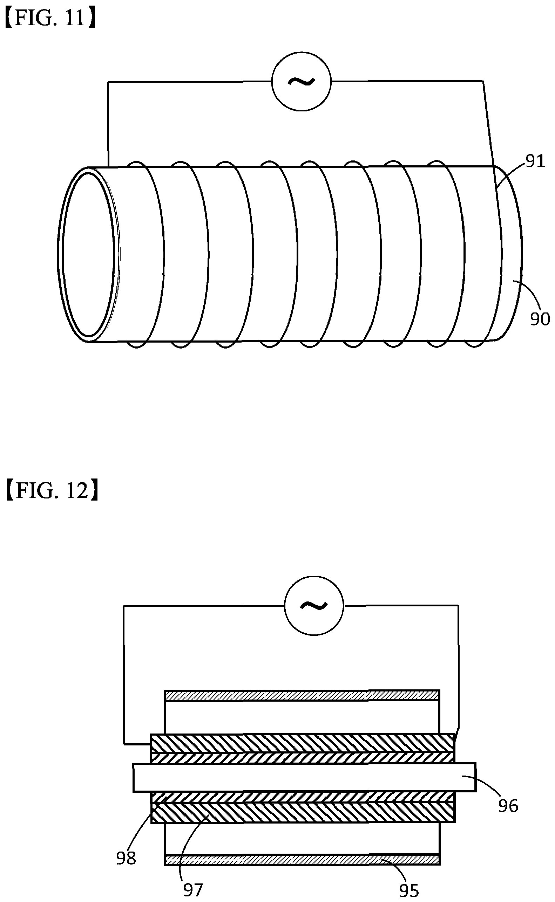

FIG. 11 shows a coil-wound drum 90 as one exemplary configuration. The coil-wound drum 90 has a cylindrical body made of carbon material and being wound with an electric coil 91. Coil-wound drum 90 may be induction-heated by flowing electric current through electric coil 91. In this configuration, a temperature of the cylindrical body may be controlled by adjusting the current intensity of electric current flowing through electric coil 91. When the cylindrical body is induction-heated, the cylindrical body radiates far-infrared rays, therefore, beans contained in coil-wound drum 90 may be heated by heat radiation of electromagnetic waves including far-infrared rays, in addition to heat conduction by being contact with the inner surface of heated cylindrical body. As a result, kernel (core) of bean can be heated without overheating hull of the bean.

Coil-wound drum 90 is induction heated by electricity as a power source, and therefore this embodiment may meet the demand of "Green Chemistry", as compared to a traditional roasting machine which uses thermal energy of combustion gas. In addition, a roasting machine according to the fifth embodiment does not require a connection to a gas pipeline and its relative equipment based on its design. Therefore, even a large-scale roasting machine allows a variety of modifications in its facilities.

According to an embodiment utilizing heat emission of carbon material roasting chamber by induction heating, beans are heated by far-infrared rays through contacting with the inner surface of the carbon material roasting chamber. Such heating method may reduce in energy cost as compared with other heating method utilizing electricity as a heat source such as a halogen heater or an electric heater.

In another example of the fifth embodiment, an element made of carbon material is utilized as an infrared heater (graphite heater). When electric current flows through a carbon material, the carbon material element generates heat including far-infrared ray radiation due to its electrical resistance. In this embodiment, an element made of carbon material may be used in place of or in addition to hot air.

In a configuration of a roasting machine including a stationary drum-shaped roasting chamber made of carbon material, the carbon material roasting chamber generates heat energy when electricity is applied.

FIG. 12 shows another exemplary configuration of a roasting machine including a rotatable drum-shaped roasting chamber 95, a tubular far-infrared radiator 97 made of a carbon material. Tubular far-infrared radiator 97 is externally fitted to a rotational shaft 96 extending along a longitudinal axis of drum-shaped roasting chamber 95 via a heat insulating material 98. When electricity is applied to tubular far-infrared radiator 97, the radiator 97 generates heat energy and emits far-infrared ray. The far-infrared rays from both tubular far-infrared ray radiator 97 and heated drum-shaped roasting chamber 95 are absorbed and radiated from each other within the roasting chamber, and finally are consumed for heating beans in the roasting chamber. Tubular far-infrared radiator 97 which is a graphite heater as a heat source is arranged within drum-shaped roasting chamber 95 so that the beans are in contact with both the heated roasting chamber 95 and the tubular far-infrared radiator 97. Thereby the beans may be heated by heat conduction and far-infrared ray radiation, which can accomplish an effective roasting.

The roasting machines having above-mentioned configurations may have a simple structure and be space saving because a separated heating source such as a stove or electric heater is no longer required.

### [Sixth Embodiment]

According to a sixth embodiment, a roasting machine utilizes air flow which tumbles or circulates beans in a stationary drum-shaped roasting chamber in a roasting process. This roasting machine is suitable for a small-scale commercial roaster having a batch size of 500 g or less, preferably 300 g or less, as an amount of substance to be roasted at a same time.

In a sixth embodiment, a drum-shaped roasting chamber includes a cylindrical body made of carbon material and having a circular or polygonal cross section perpendicular to a longitudinal direction of the cylindrical body. The cylindrical body has a fixed or removal perforated plate at the bottom end of the body.

The cylindrical body is fixed upright in a way that its bottom is positioned on a lower side of the drum-shaped roasting chamber and positioned above an airflow generator, thereby the airflow from the generator blows into the roasting chamber via the perforated plate.

According to a sixth embodiment, the airflow generator may be a hot air generator or a blower that blows air having a normal temperature.

In the case of an assembly with a hot air generator, hot air from the hot air generator acts as a heating medium for heating beans in the roasting chamber as well as a stirring member for tumbling beans during roasting period.

In a configuration employing a blower as an airflow generator, it is preferable to utilize the cylindrical body as a heater. As previously described in the fifth embodiment, the drum-shaped roasting chamber made of carbon material can act as a carbon heater to increase its own temperature by induction heating or applying electricity to the drum-shaped roasting chamber. In this configuration, beans contained in the cylindrical body is agitated by air flow from the blower, and are heated by heat conduction and far-infrared ray radiation from the heated cylindrical body.

In this embodiment, the blower may be a sirocco fan, an axial fan, or other blower.

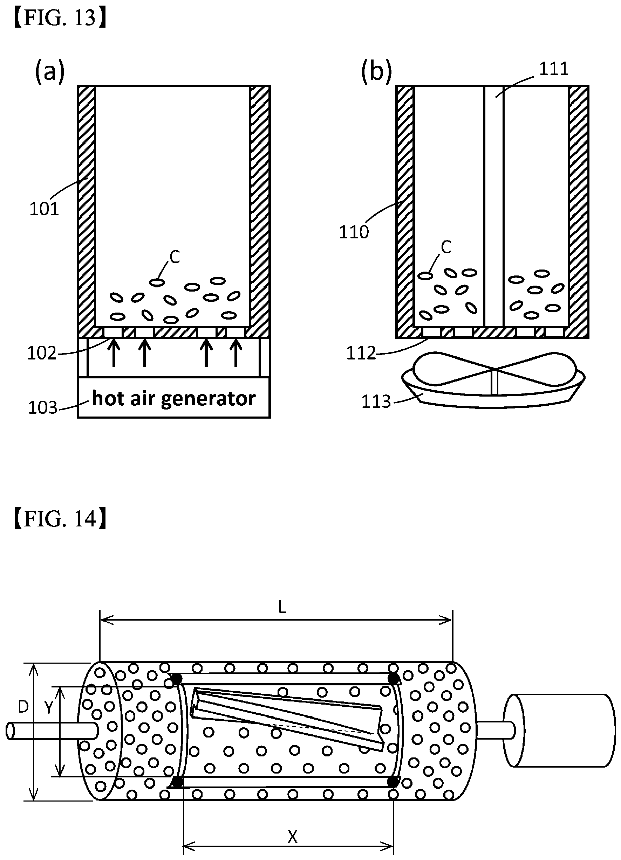

FIG. 13 is a schematic view showing an exemplary configuration adjacent a drum-shaped roasting chamber of a roasting machine according to a sixth embodiment.

In a configuration shown in FIG. 13(a), a hot air generator 103 is disposed below a bottom wall 102 of a cylindrical body 101, which serves as a drum-shaped roasting chamber made of carbon material. Bottom wall 102 is a perforated plate, and hot air (depicted by arrow) from the hot air generator 103 is blown into cylindrical body 101 through bottom wall 102. Beans c in cylindrical body 101 are tumbled and heated by the hot air.

The bottom wall is not limited to a fixed plate, and may be replaced with a removable perforated lid in FIG. 13(a). An open top end of the cylindrical body communicates with a casing provided with an inlet for charging beans.

According to the invention, a cylindrical body made of carbon material may displace a conventional drum used in a known fluid air type roasting machine to form an inventive roasting machine utilizing hot air as both heating medium and agitating device.

FIG. 13(b) shows an example of a fluid air type roasting machine in which a drum-shaped roasting chamber may act as a heating element.

A cylindrical body 110 which serves as a drum-shaped roasting chamber made of carbon material has a fixed or removal perforated plate at the bottom of cylindrical body 110. A blower 113 is arranged below the cylindrical body 110, and air from a blower flows into cylindrical body 110 through a plurality of holes 112 of the perforated plate.

In some configurations, cylindrical body 110 may act as a graphite heater in the case of including an electric circuit (not shown in FIG. 13(b)) capable of applying electricity to cylindrical body 110. In an alternative configuration, an induction coil winds around the peripheral surface of the cylindrical drum like a configuration shown in FIG. 11, and heats cylindrical body 110 by induction heating. In a preferable configuration, a roasting machine may further comprise another graphite heater 111 at the center of cylindrical body 110 so that a heating efficiency may be increased. In another preferable configuration, an open top end of the cylindrical body communicates with a casing having an inlet for charging unroasted beans.

In the roasting machine having such configurations, a drum-shaped roasting chamber is an effective heating region where far-infrared rays radiate from both cylindrical body 110 and an additional graphite heater 111. Therefore, beans c tumbled by the air from blower 113 is efficiently heated and roasted by far-infrared rays in addition to heat conduction due to contact with the inner surface of cylindrical body 110 and an additional graphite heater 111.

### EXAMPLES

### <Type of roasting chamber (container) used>

Example:

### (1) Pot-shaped container type roasting chamber

An artificial graphite block (bulk density: 1.87 g/cm³, thermal conductivity at 25 °C: 126 W/m · K) was cut to obtain a pot-shaped container body (open at its top) having 200 mm for D₁, 180 mm for D₂, and 85 mm in height (H) shown in FIG. 1 as a roasting chamber.

The pot-shaped container body was used with or without a coating layer on the inner and outer surfaces of the container body. The coating layer has an average thickness of 20 µm and was made from a polysiloxane-based heat-resistant coat (Thermozine CT type paint manufactured by Tokyo Thermochemical Industry Co., Ltd.).

The container body having an opening at its top (open top container body) was used in three different modes: an open top container body alone, an assembly of an open top container body and a lid having a notched portion (53 mm × 7 mm) at edge of the lid, and an assembly of an open top container body and a lid having an opening of φ40 mm or φ80 mm at the center of the lid.

### (2) Tray-shaped container type roasting chamber

An artificial graphite block (bulk density: 1.87 g/cm³, thermal conductivity at 25 °C: 126 W/m · K) was cut to obtain two tray-shaped container bodies different in size as indicated in FIG. 3.
Small-sized tray: D₁ = 100 mm, D₂ = 100 mm, H = 70 mm
Medium-sized tray: D₁ = 265m, D₂ = 260mm, H = 50 mm

The tray-shaped container body has a coating layer on the inner and outer surfaces of the container body. The coating layer is made from polysiloxane-based heat-resistant coat (Thermodin CT type paint manufactured by Tokyo Thermochemical Industry Co., Ltd.) and has an average thickness of 20 µm.

The opening at the top of a tray-shaped container body was closed with a lid. A lid used for the small-sized tray-shaped container body has neither a notch nor an opening. A lid used for the medium-sized tray has a notched portion (73 mm × 6 mm).

### (3) Drum-shaped roasting chamber used for a direct heating type roasting machine

An artificial graphite (bulk density: 1.77 g/cm³, thermal conductivity at 25 °C: 85 W/m · K) was cut to obtain a cylindrical body having one closed distal end in longitudinal direction thereof as shown in FIG. 6. The cylindrical body is 134 mm in outer diameter (D) and 210 mm in longitudinal length (L). The thickness of peripheral wall of the cylindrical body is about 4 mm. The other distal end of the cylindrical body is an open end, but is closed with a graphite lid. A motor for rotating the cylindrical body is connected to the lid.

As shown in FIG. 6, the cylindrical body has a rectangular opening (X = 120 mm and Y = 60 mm) on the peripheral wall of the body as an inlet/outlet for (un)roasted substance. The rectangular opening is closed with a glass cover and a substance in the cylindrical body can be observed through the glass cover during roasting.

An L-shaped graphite stirring rod having a length of 100 mm, height of 20 mm and thickness of 5 mm was attached to the inner surface of the cylindrical body at an angle of about 20° with respect to the longitudinal direction of the body, with carbon cement.

Two types of drum-shaped roasting chamber were prepared: one with a polysiloxane-based heat-resistant coating layer (Thermodin CT type paint from Tokyo Thermochemical Industry Co., Ltd.) having an average thickness of 20 µm on the inner surface of the cylindrical body, and the other without a coating layer.

### (4) Drum-shaped roasting chamber used for hot air heating type roasting machine (batch size: 1 kg)

An artificial graphite (bulk density: 1.77 g/cm³ and thermal conductivity at 25 °C: 85 W/m · K) was cut into a cylindrical body as shown in FIG. 9, with 207 mm in outer diameter (D), 210 mm in length (L), and 4.5 mm in thickness (t). The entire surface of the cylindrical body was coated with a polysiloxane-based heat-resistant coat (Thermodin CT type paint manufactured by Tokyo Thermochemical Industry Co., Ltd.) to provide a drum-shaped roasting chamber used for a hot air heating-type roasting machine having a batch size of 1 kg. The average thickness of the coating layer was 20 µm.

Three L-shaped rods each having 20 mm in height and 185 mm in length as a stirring member were attached to the inner surface of the cylindrical body separately such that each rod was independently tilted with respect to the rotational axis parallel to the longitudinal direction of the cylindrical body, so that the roasted product can be pushed out toward a discharge port. The discharge port is located on one end of the cylindrical body, corresponding to the opposite end to the entrance of the airflow.

### Comparative example:

### (1) Handy roaster made of porcelain

A skillet-shaped handy roaster, "Iritate Meijin" (trademark, Ichinomiya Bussan Co., Ltd.) made of unglazed porcelain was used. The handy roaster has dimensions: D₁= 120 mm, D2= 38 mm, and H = 54 mm (FIG. 2). The handy roaster was used with the top opened.

### (2) Direct heating type roasting machine including a drum-shaped roasting chamber made of stainless steel

A direct heating type roasting machine for home roasting "Camping Moon" (trademark) was used. The roasting machine includes a cylindrical body made of punched stainless steel which has numerous openings each having a diameter of 3.8 mm, as shown in FIG. 14. One and the other distal ends of the cylindrical body in longitudinal direction are closed by fixed walls. A motor for rotating the cylindrical body is mounted to one end wall. The cylindrical body has dimensions of 134 mm in outer diameter of the end wall, 195 mm in its longitudinal length, and 1.5 mm in thickness of the steel constituting the body.

A rod was attached to the inner surface of the cylindrical body to provide a stirring member, similar to a drum-shaped graphite roasting chamber used in Example. The rod had dimensions of 130 mm in longitudinal length, 44 mm in height and 1.5 mm in thickness (width), and was attached to the inner surface of the cylindrical body at an angle of about 20° with respect to the longitudinal direction thereof. The cylindrical body has a rectangular opening on the peripheral wall thereof. The rectangular opening is 160 mm long along the longitudinal direction and 60 mm wide along the peripheral direction, and closed with an openable transparent glass which is responsible for an inlet/outlet for (un)roasted beans.

### (3) Steel drum used for hot air heating type roasting machine (batch size of 1 kg)

An ordinary commercial hot air-heating type roasting machine which has a drum-shaped roasting chamber was used. The drum-shaped roasting chamber includes a cylindrical body made of steel and has a batch size of 1kg. The cylindrical body has almost the same shape and size except its thickness, as a graphite cylindrical body used for hot air heating type roasting machine in Example.

### [Roasting conditions]

### (1) Unroasted food (coffee green beans)

Brazilian coffee green beans or Colombian coffee green beans were used.

Colombian coffee green beans species are relatively large, thick and hard, and water contained in the bean is not evaporated easily. Due to these specific characteristics, Colombian coffee green beans are difficult to be roasted evenly, while the flavor is greatly affected by roasting uniformity. Thus, flavor of roasted Colombian coffee beans tends to depend on quality of roasting.

### (2) Heating method

A heating source was chosen according to a type of roasting machine (direct heating type, induction heating type, or hot air heating type).

For a direct heating type roasting machine, a tabletop gas burner stove (Iwatani: 88 mm in diameter of the burner) or a gas burner stove (Tanico Co., Ltd.: 100 mm in diameter of the burner) was used for heating.

For induction heating, a household IH cooker (3-port cooktop IH cooker (AH1735CA), manufactured by AEG) was used.

Hot air heating is a method of heating by hot air passing through the cylindrical body from a heat source (gas) connected to a commercial roasting machine. The roasting machine has a spoon on a front door thereof so that flavor and color of beans can be checked by taking out a spoonful of beans during roasting. Temperatures of a duct and a cylindrical body can be controlled based on the check result.

Roasting conditions (roasting time, heating power adjustment) for achieving a desired roasting level were manually adjusted by an expert who had 20 years of coffee beans roasting experience, based on the check results of crack sound, bean appearance, and aroma of beans, and a measured temperature of roasting chamber.

A container-type roaster was placed on a gas stove and heated. A roasting heating power and temperature were manually controlled only at the time, before and after the occurrence of crack of beans in the roasting process. In the case of a handy roaster, the handy roaster was heated while the roaster was shaken by moving the handle and the heating power was controlled in order to avoid the roaster from being overheated. In the case of direct-heating type roaster including a drum-shaped roasting chamber, the cylindrical body was heated by flame which contacted the peripheral wall of the cylindrical body, and heating power was properly adjusted in order to avoid the cylindrical body from being overheated.

Aroma check during roasting was conducted only in a production with use of a commercial hot air heating type roasting machine (batch size of 1 kg or 5 kg).

### [Evaluation methods]

### 1. Appearance of roasted beans

The color variation in a batch of beans which were roasted at the same time was visually observed. A uniformity in color of roasted beans is a factor in determining their commercial value.

### 2. Flavor of coffee

Beans about 16 hours after being roasted were roughly ground by a common manual-type coffee mill.

12 g of thus obtained coffee powder was put into a Shigaraki ware coffee pot, and 140 g of hot water having a temperature of about 90 °C was poured gradually in this pot over about 30 seconds. The Shigaraki coffee pot has an opening on top, which was closed with a lid and left to steep for 3 minutes. Thereafter, coffee in the pot was brewed in a cup through a pottery filter.

Regarding brewed coffee, five panelists evaluated flavor, which includes aroma and taste (sourness, astringency, richness, etc.), to determine a score from excellent (5), good (4), standard (3), acceptable (2), or bad (1), by comparing to a brewed coffee set as 3 (standard level). An ordinary available coffee bean was set as 3 (standard level). An average of scores determined by the five panelists was adopted for the evaluation result.

### 3. Preservation of flavor

Coffee powder (medium fine), which was obtained by grinding with a coffee mill, was packaged in a bag and preserved for one week. After one week preservation, flavor was examined. In general, bean powder's surface area is larger than unground roasted bean's surface, therefore, the bean powder is easily oxidized and easily deteriorated due to chemical change inside the bean.

12 g of the coffee powder after preservation for 1 week was dripped in a cup by pouring 140 g of hot water having a temperature of about 90 °C gradually around 2 minutes, through a paper filter placed on a container (Pyrex^{®}).

Flavor of the dripped coffee was evaluated based on the criteria previously described (see item "2. Flavor of coffee"). That is, five panelists each determined a score by comparing with a dripped coffee of ordinary available beans (set as a standard level), and an average of the scores were calculated for the evaluation result. The coffee beans set as the standard level were produced by a professional roasting machine in which heating power is controlled automatically.

### <Evaluation of roasting ability and flavor of roasted beans with respect to configuration of container-type roaster and heating method: case of Brazilian bean species and medium roast> Example 1:

The roaster was a combination of a pot-shaped container body (open top) having a polysiloxane-based heat-resistant coating layer on inner and outer surfaces of the container body, and a lid having a notched portion on its edge.

The roaster was preheated to reach a temperature of 100 °C, and then, 50g of green coffee beans (Brazilian species) were spread on the bottom of the container body as shown in FIG. 1. The roaster where the opening at the top of the container body was closed with the lid was placed on a gas burner stove (burner diameter: 88 mm) and heated at a slightly stronger heating power. A first crack occurred after 5 minutes heating. The lid was removed and a temperature inside the container body was measured by an infrared thermometer (manufactured by Custom Co., Ltd., model number MRH-1). The temperature was 180 °C, and beans in the container body were not evenly colored.

The opening at the top of the container body was closed with the lid again, the beans in the container body were continued to be heated at a medium heating power. Four minutes later, a second crack occurred, and heating was stopped. The roasting time period was 10 minutes.

Thus roasted coffee beans were discharged from the roaster, conveyed to a metal colander, and cooled to a normal temperature by a cooling fan. The weight of roasted coffee beans was 42 g. The water loss by evaporation was 16% by weight based on the initial weight, which corresponded to medium roast. Best roasting level of Brazilian coffee beans are medium roast because of their good balance with sourness.

The obtained roasted beans were evaluated with respect to their appearance, flavor, and flavor preservation in accordance with the above-mentioned evaluation method. The evaluation results are also shown in Table 1.

### Examples 2 through 5:

Container type roasters shown in Table 1 were used with the opening at the top closed by a lid. Brazilian beans species were roasted to medium roast by direct heating (Examples 2 and 3) or induction heating (IH) (Examples 4 and 5).

20 g or 60 g of green coffee beans were contained in a small-sized tray or a medium-sized tray respectively.

A respective roasting time for achieving medium roast similar to Example 1 is shown in Table 1.

The produced roasted beans were evaluated with respect to their appearance, flavor, and flavor preservation in the same manner as in Example 1. The evaluation results are also shown in Table 1.

The roasting time and the water loss by evaporation with respect to the initial weight were as follows.

### Example 4: 10.5 minutes and 14% by weight

### Example 5: 8 minutes and 18% by weight

It was confirmed that roasting with use of IH stove could be accomplished for the same heating period with use of a gas stove.

### Comparative Example 1:

A handy roaster made of porcelain was used. This handy roaster was preheated for 7 minutes and charged with 30g of green coffee beans (Brazilian species). Roasting was conducted in a way that the roaster was heated by medium flame of burner while being shaken by moving the handle by hand wearing a glove.

Steam generated after 1.5 minutes heating by flame. A first crack of the beans occurred 5 minutes after initiation of heating. After the occurrence of the first crack, the burner flame was lowered, and amount of smoke gradually increased. About 1 minute later, a second crack occurred, and the roaster was kept away from the flame (roasting period: 7.5 minutes). Thus roasted beans were discharged from an opening on the handle, conveyed to a metal colander and cooled to a normal temperature by a cooling fan in the same manner as in Example 1. The roasted beans were slightly browned on the surface.

The produced roasted beans were evaluated with respect to appearance, flavor, and flavor preservation in the same manner as in Example 1. The results are also shown in Table 1.

### Reference example 1:

A commercially available package of Brazilian coffee beans (medium roast) was used. The purchased beans have gone past 3 months since the beans were produced, calculating from the freshness expiration date as indicated on the package and their shelf life of 6 months from roasting. The purchased beans were produced by automatically roasting in a large scale (batch size: from 30 to 60 kg) commercial hot-air heating type roasting machine including a steel drum-shaped roasting chamber under a predetermined roasting profile (heating power, temperature control, and roasting time etc.). Flavor and flavor preservation of beans of Reference Example 1 were set as standard level (3) in score.

### Reference example 2:

An expert roasted green coffee beans (Brazilian species) with use of a commercial hot air heating type roasting machine (batch size: 5 kg), with manually adjustment of an amount of hot air and meticulous check of color and aroma of beans taken out during roasting. Beans were finished in medium roast and the roasting time was 22 minutes.

**[Table 1]**

| | **Roasting chamber (container)** | | **Roasting conditions** | | | **Evaluation** | | |
|---|---|---|---|---|---|---|---|---|
| | **Type (shape)** | **Body material** | **Heating type** | **Roasting level Roasting time** | **Stirring Heating power adjustment** | **Appearance of roasted beans** | **Flavor** | **Flavor preservation of powder** |
| **Example 1** | **pot with lid** | **artificial graphite** | **gas stove** | **medium roast 10 min.** | **no stirring manual control** | **uniform color** | **5** | **5** |
| **Example 2** | **small-sized tray with lid** | **artificial graphite** | **gas stove** | **medium roast 8 min.** | **no stirring manual control** | **uniform color** | **5** | **5** |
| **Example 3** | **medium-sized tray with lid** | **artificial graphite** | **gas stove** | **medium roast 12 min.** | **no stirring manual control** | **slightly uneven color** | **4** | **3** |
| **Example 4** | **pot with lid** | **artificial graphite** | **IH** | **medium roast 10.5 min.** | **no stirring manual control** | **uniform color** | **5** | **5** |
| **Example 5** | **small-sized tray with** | **artificial graphite** | **IH** | **medium roast 8 min.** | **no stirring manual control** | **uniform color** | **5** | **5** |
| **Comparative example 1** | **handy roaster** | **porcelain** | **gas stove** | **medium roast 7.5 min.** | **shaken hand by shaken by hand manual control a lot of smoke** | **uneven color** | **2 - 3** | **1 unsavory stale** |
| **Reference example 1** | **large scale drum** | **steel** | **hot air** | **medium roast** | **commercial beans automatic control** | **almost even color** | **3** | **3** |
| **Reference example 2** | **drum (batch size: 5kg)** | **steel** | **hot air** | **medium roast 22 min.** | **rotation of drum manual control** | **uniform color** | **5** | **5** |

Reference example 2 is a roasting case that an expert conducted with manual control of roasting conditions. The produced roasted beans were superior to a commercial product (Reference example 1) set as standard level in flavor as well as its preservation.

Examples 1 through 5 were roasted with use of a container type roaster made of artificial graphite. The produced roasted beans were all superior in flavor and flavor preservation as compared with Reference Example 1. The evaluation results of the roasters comprising a pot-shaped container body (Example 1) and a small-sized tray (Example 2) were competitive to Reference Example 2 in flavor and flavor preservation. Example 3 tended to be inferior to Examples 1, 2, 4, and 5, in the evaluation of flavor and flavor preservation. This may be because Example 3 which employed a medium-sized tray could not be heated on the entire bottom surface of the tray by flame, thus decreasing in color uniformity of the roasted beans and deteriorating flavor.

Comparative example 1, in which the handy roaster was shaken by hand during roasting, provided roasted beans with flavor inferior to standard commercial coffee beans although the heating power was controlled based on bean's color. Furthermore, the obtained coffee powder was deteriorated in flavor of the brewed coffee using the powder was unpleasant. This result maybe caused from insufficient removal of water contained in the beans by roasting.

### <Evaluation of roasting ability and flavor of roasted beans with respect to configuration (shape and vent size) of container-type roaster: Colombian bean species, medium roast>

### Examples 11 through 15:

A pot-shaped container body was used with/without a lid. A size of a vent differs depending on a type of lid or the absence of the lid as shown in Table 2. Colombian green beans were roasted by direct heating (burner of flame diameter: 100 mm) so as to be finished in medium roast (water loss by evaporation was from 14 to 16% by weight). The container was preheated to 100 °C, and then green coffee beans were spread on the bottom of the container body in the same manner as in Example 1.

The roasting time of each example is shown in Table 2. Table 2 also shows the evaluation results of bean color, flavor, and flavor preservation.

### Comparative Example 11:

The same handy roaster as used in Comparative example 1 was used and Colombian beans were roasted over an open flame so as to be finished in medium roast. The water loss by evaporation was from 14 to 16% by weight of the bean. After preheating for 7 minutes, the beans were put in and roasted for 7.5 minutes. Table 2 shows the evaluation results of the obtained roasted beans with respect to bean color, flavor, and flavor preservation.

### Reference Example 11:

The roasted beans of Reference example 11 were commercially available Colombian beans (medium roast) set as standard level (3) in flavor and flavor preservation. These beans, similar to Reference Example 1, were produced by automatically roasting with a large-scale commercial roasting machine (drum-shaped steel roasting chamber, hot air heating type) in accordance with a programed heating power, temperature control, and roasting time.

### Reference example 12:

The roasted beans of Reference example 12 were Colombian beans (medium roast) that were retailed in sizes according to customer's needs.

Roasting was conducted with a hot-air type roasting machine (from Daiichi Denshi Co., Ltd.), which includes a cylindrical body made of glass and fixed vertically in its longitudinal direction. Hot air from the bottom of the glassy cylindrical body tumbles coffee beans contained in the cylindrical body during roasting. The state of beans during roasting can be observed through the cylindrical body made of glass. A small amount of beans was automatically roasted in accordance with a programmed roasting profile selected based on a desired roasted level.

### Reference example 13:

Reference example 13 were Colombian beans which were roasted by manually controlling to finish medium roast with use of a hot-air heating type professional roasting machine (batch size: 5kg), which was the same roasting machine used in Reference Example 2. The roasting time was 22.5 minutes.

**[Table2]**

| | **Roasting chamber (container)** | | | **Roasting conditions** | | | **Evaluation** | | |
|---|---|---|---|---|---|---|---|---|---|
| | **Type (shape)** | **Body material** | **vent size** | **Heating type** | **Roasting level Roasting time** | **Stirring Heating power adjustment** | **Appearance of roasted beans** | **Flavor** | **Flavor preservation of powder** |
| **Example 11** | **pot with lid** | **artificial graphite with coat** | **φ40** | **gas stove** | **medium roast 11.5 min.** | **no stirring manual control** | **uniform color** | **5** | **5** |
| **Example 12** | **pot with lid** | **artificial graphite with coat** | **φ80** | **gas stove** | **medium roast 12 min.** | **no stirring manual control** | **uniform color** | **5** | **5** |
| **Example 13** | **pot without lid** | **artificial graphite with coat** | **φ180** | **gas stove** | **medium roast 13 min.** | **no stirring manual control** | **uniform color** | **4 a little scent** | **4 slightly deteriorated** |
| **Example 14** | **pot with lid** | **artificial graphite with coat** | **0** | **gas stove** | **medium roast 11 min.** | **no stirring manual control** | **uniform color** | **5** | **5** |
| **Example 15** | **pot with lid** | **artificial graphite coat without coat** | **0** | **gas stove** | **medium roast 10.5 min.** | **no stirring manual control** | **uniform color** | **5** | **5** |
| **Comparative example 11** | **handy roaster** | **porcelain** | **without lid φ38** | **gas stove** | **medium roast 7.5 min.** | **shaken by hand manual control a lot of smoke** | **uneven color** | **2-3** | **1-2 unsavory stale** |
| **Reference example 11** | **large scale drum** | **steel** | **-** | **hot air** | **medium roast** | **commercial beans automatic control** | **almost even color** | **3** | **3** |
| **Reference example 12** | **vertically fixed drum** | **glass** | **-** | **hot air** | **medium roast** | **commercial beans automatic control** | **almost even color** | **2 strong sour** | **1-2** |
| **Reference example 13** | **drum (batch size: 5kg)** | **steel** | **-** | **hot air** | **medium roast 22.5 min.** | **rotation of drum manual control** | **uniform color** | **5** | **5** |

Examples 11 through 15 were roasting cases that a roasting machine having a graphite roasting chamber was used. The flavor as well as flavor preservation of the produced roasted beans were superior to those of commercial beans (Reference Example 11) set as standard level. Examples 11, 12, 14, and 15 exhibited competitive qualities to Reference example 13 which was professionally roasted product by an expert. Example 13 where roasting was conducted using a roaster without a lid was not competitive. From the comparison between Example 14 and Example 15, it was confirmed that the flavor and flavor preservation were not affected by a coating layer on the surface of the container body.

On the other hand, roasting with use of a handy roaster (Comparative example 11) was troublesome due to a movement operation by hand and manual adjustment in heating power. Moreover, roasted coffee beans in Comparative example 11 tended to be inferior to commonly available roasted coffee beans in flavor. Furthermore, during roasting in Comparative example 11, a lot of smoke was exhausted due to an unclosed opening at the top of the handy roaster. The amount of smoke was larger than that of Example 13.

Roasted beans in Reference example 12 were almost even in appearance (bean's color) probably due to an automatic roasting operation such as heating power adjustment and stirring beans contained in the roasting chamber, while their flavor was inferior to that of Reference example 11. The difference in flavor between Reference example 12 and Reference example 11 may be caused from the constituent materials of the roasting chamber. Reference example 12 employs a drum-shaped glass roasting chamber while Reference example 11 employs a drum-shaped steel roasting chamber.

### <Evaluation of roasting ability and flavor of roasted beans with respect to kinds of drum-shaped roasting chamber: Colombian beans, medium roast>

### Comparative Example 21:

Comparative Example 21 employed a commercially available direct-heating type roasting machine which includes a stainless steel cylindrical body having a previously mentioned size and shape.

The cylindrical body (drum-shaped roasting chamber) was directly heated with a gas stove equipped with two linear burners while rotating at 25 rpm. The drum-shaped roasting chamber was preheated to reach the inside temperature to 140 °C as measured by a thermocouple and was charged with 150 g of Colombian green beans through an inlet on the cylindrical body, followed by roasting. A first crack occurred around a temperature of 240 °C. This temperature was kept until a second crack. Upon the second crack, heating was stopped. While roasting, the heating power was controlled based on bean color by visually check and crack sound through the inlet.

The roasting time was 7 minutes, and the water loss by evaporation was 16% by weight based on the initial weight of beans. Table 3 shows the evaluation results of bean color, flavor, and flavor preservation of the produced roasted beans. The evaluation results of Reference example 11 (commonly available Colombian roasted beans which were produced by automated roasting) are also shown in Table 3.

### Comparative example 22:

Comparative example 22 was a roasting case that a professional hot air heating type roasting machine (batch size: 1kg) including a rotatable drum-shaped roasting chamber and having a configuration shown in FIG 10 was used. A rotation speed of the drum-shaped roasting chamber was about 60 rpm. The drum-shaped roasting chamber was preheated for 12 minutes to reach 150 °C, and charged with 1 kg of green coffee beans from the hopper, followed by roasting. Bean's color and aroma were monitored by frequently taking out a spoonful of beans during roasting, and thereby controlling the heating power to finish into medium roast. The roasting time was 22 minutes, and the weight of the roasted beans was 830g. The water loss by evaporation was 17% by weight. Table 3 shows the evaluation results of bean color, flavor, and flavor preservation.

### Examples 21 and 22:

Examples 21 and 22 employed a direct-heating type roasting machine including a graphite cylindrical body as a drum-shaped roasting chamber. This roasting machine was prepared by displacing the cylindrical body in a roasting machine used in Comparative example 21 with the graphite cylindrical body. A coating was applied to the graphite cylindrical body in Example 21 but not applied to the cylindrical body in Example 22.

The graphite cylindrical body was preheated to reach 150 °C, and charged with 150 g of Colombian green beans through the inlet and roasted in the same manner as in Comparative example 21. A temperature inside the roasting chamber was kept at about 210 °C by monitoring the temperature with a thermocouple and adjusting a cock of propane gas as a thermal source. Upon the occurrence of a second crack, heating was stopped to finish into medium roast. The water loss by evaporation was 17% by weight based on the initial weight of the beans.

### Example 23:

The cylindrical body in the hot air heating type roasting machine (batch size: 1 kg) used in Comparative example 22 was displaced with a graphite cylindrical body (batch size: 1kg). Roasting was conducted with use of the roasting machine prepared above in the same manner as in Comparative example 22. The preheating time to reach 150 °C was 11 minutes. Table 3 also shows the results of bean color, flavor, and flavor preservation.

**[Table 3]**

| | **Roasting chamber (container)** | | **Roasting conditions** | | | **Evaluation** | | |
|---|---|---|---|---|---|---|---|---|
| | **Type (shape)** | **Body material** | **Heating type** | **Roasting level Roasting time** | **Stirring Heating power adjustment** | **Appearance of roasted beans** | **Flavor** | **Flavor preservation of powder** |
| **Example 21** | **one open end drum** | **artificial graphite with coat** | **gas stove** | **medium roast 18 min.** | **rotation of drum manual control** | **uniform color** | **5** | **5** |
| **Example 22** | **one open end drum** | **artificial graphite without coat** | **gas stove** | **medium roast 17 min.** | **rotation of drum manual control** | **uniform color** | **5** | **5** |
| **Example 23** | **hot air heating type drum** | **artificial graphite with coat** | **hot air** | **medium roast 21 min.** | **rotation of drum manual control** | **uniform color** | **5** | **5** |
| **Comparative example 21** | **direct heating type drum** | **punched stainless steel** | **gas stove** | **medium roast 7 min.** | **rotation of drum manual control** | **almost even color** | **2-3** | **1-2 stale** |
| **Comparative example 22** | **drum (batch size: 1kg)** | **steel** | **hot air** | **medium roast 22 min.** | **rotation of drum manual control** | **uniform color** | **5** | **5** |
| **Reference example 11** | **large scale drum** | **steel** | **hot air** | **medium roast** | **commercial beans automatic control** | **almost even color** | **3** | **3** |

Examples 21 through 23, which employed a graphite cylindrical body for a drum-shaped roasting chamber, could achieve almost the same excellent flavor, and flavor preservation as Comparative example 22 in both of direct heating and hot air heating. Regarding Comparative example 22, an expert conducted roasting with use of a commercial roasting machine equipped with a steel cylindrical body (batch size of 1 kg) under manual control of the heat power based on meticulous check of aroma in addition to appearance of beans. Comparative example 21, where a direct-heating type roasting machine including a cylindrical perforated body made of stainless steel for the roasting chamber was used, could provide roasted beans having almost even color, but inferior flavor as compared to roasted beans with use of an ordinary professional roasting machine (Comparative example 22) and common commercially available product (Reference example 11). In Comparative example 21, delicate control of heat power only based on bean's color and crack sound was difficult because of steep temperature rise by hot air through perforation on the peripheral wall of the cylindrical body.

From the comparison between Example 21 and Example 22, it was confirmed that the presence or absence of a coating layer had almost no effect on the roasting time period, flavor, and flavor preservation. Example 22, in which roasting was performed with use of a graphite cylindrical body without a coating layer, no graphite powder was mingled in the produced roasted beans.

### <Evaluation of roasting ability and flavor of roasted beans with respect to kinds of drum-shaped type roasting chamber: Colombian beans, high roast>

### Examples 31 and 32:

Examples 31 and 32 are cases that Colombian green beans are roasted with use of graphite drum-shaped roasting chambers corresponding to Examples 21 and 23, respectively, and finished into high roast. The water loss by evaporation was 23% by weight (Example 31) and 26% by weight (Example 32). Each roasting time period and evaluation results of roasted beans are shown in Table 4.

### Comparative example 31:

Comparative example 31 was a case that Colombian beans (high roast) were produced by roasting with use of a professional hot air-heating type roasting machine (batch size of 1 kg) which was the same one as used in Comparative example 22. The water loss by evaporation was 26% by weight. The evaluation results of the produced roasted beans are shown in Table 4.

### Reference example 31:

Reference example 31 was roasted beans within 24 hours after roasting with use of the same roasting machine as used in Reference Example 12. The roasting machine was a hot air heating type automatic roasting machine including a stationary small-sized cylindrical body made of glass. The score of the roasted beans were set as standard level (3) in flavor and flavor preservation.

**[Table 4]**

| | **Roasting chamber (container)** | | **Roasting conditions** | | | **Evaluation** | | |
|---|---|---|---|---|---|---|---|---|
| | **Type (shape)** | **Body material** | **Heating type** | **Roasting level Roasting time** | **Stirring Heating power adjustment** | **Appearance of roasted beans** | **Flavor** | **Flavor preservation of powder** |
| **Example 31** | **one open end drum** | **artificial graphite with coat** | **gas stove** | **high roast 18 min.** | **rotation of drum manual control** | **uniform color** | **5** | **4-5** |
| **Example 32** | **hot air heating type** | **artificial graphite without coat** | **hot air** | **high roast 28 min.** | **rotation of drum manual control** | **uniform color** | **5+** | **5+** |
| **Comparative example 31** | **drum (batch size: 1kg)** | **steel** | **hot air** | **high roast 26 min.** | **rotation of drum manual control** | **uniform color** | **5+** | **5+** |
| **Reference example 31** | **stationary small-sized drum** | **glass** | **hot air** | **high roast** | **commercial beans automatic control** | **almost even color** | **3** | **3** |

Examples 31 (direct heating type) and Example 32 (hot air heating type), which employed a graphite drum-shaped roasting chamber, were superior in flavor as well as flavor preservation to Reference example 31 which was available roasted beans according to customer's needs. It is difficult to precisely control the thermal power in the direct heating. From the result of Example 31, it may be understood that heat energy was given to the central portion of bean by not only flame but also far-infrared rays radiated from graphite of the drum-shaped roasting chamber.

High roast Colombian beans have commonly rich flavor which is known as used for espresso. Roasted beans which were roasted by an expert with manual adjustment of roasting conditions are particularly strong in flavor and set as "5+" in score. Example 32, which employed a graphite drum-shaped roasting chamber in a hot-air heating type roasting machine, also achieved flavor and flavor preservation as good as Comparative example 31.

Further, Example 32 exhausted less smoke than Comparative example 31 during roasting. This seems to result from pores on the surfaces of graphite drum-shaped roasting chamber. The pores can absorb tar and oil exuded from beans. Exhaust gas with less tar and oil content reduces frequency of cleaning the exhaust duct and the labor required for the cleaning.

### <Taste comparison by a taste measurement instrument>

The Colombian roasted beans (medium roast) produced in Examples 21 through 23, Comparative examples 21, and Reference examples 12 and 13 were evaluated with respect to initial taste (bitterness and sourness, astringency, umami, saltness) and aftertaste (bitterness, astringency, umami richness) with use of a taste sensing system TS-5000Z (Intelligent Sensor Technology, Inc.). The roasted beans were milled into powder and stored for one week. The one week-stored powder was measured for the evaluation. The taste sensing system converts six tastes (saltness, umami, sourness, bitterness, astringency, and sweetness) each into numerical data based on difference in a membrane potential of six taste sensors composed of artificial lipid membranes. The "initial taste" is a taste perceived when substance (food) first enters mouth, and the "aftertaste" is a persistent taste that remains in a mouth after a substance has been swallowed.

Conversion into numerical data by this taste sensing system enables the taste to be expressed as a numerical value by multiplying the taste sensor output by an appropriate coefficient. The obtained information (taste item) is based on Weber's law and the basic response characteristics of the sensor. The measurement value is expressed as "unit". One unit corresponds to 20% in concentration difference, which is perceived by an ordinary person.

For this measurement, Reference example 11 (commonly available product) is used as a reference solution whose potential is set as zero. The potential difference between the reference solution and the sample solution is measured as an initial taste of the sample solution. After the measurement of the initial taste, the used sensors are lightly washed, and then re-measured. The potential difference with the reference solution between the measurement before and after the initial taste was measured for the aftertaste.

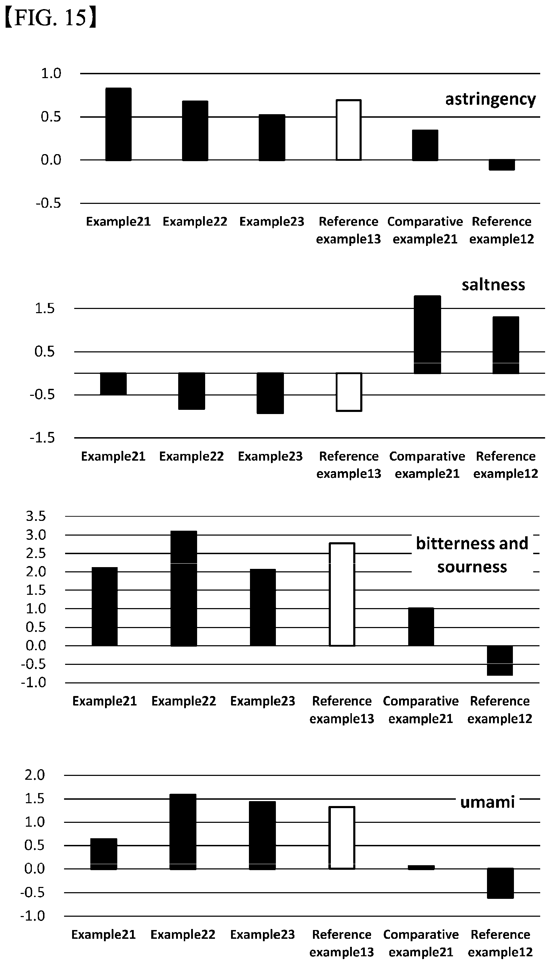

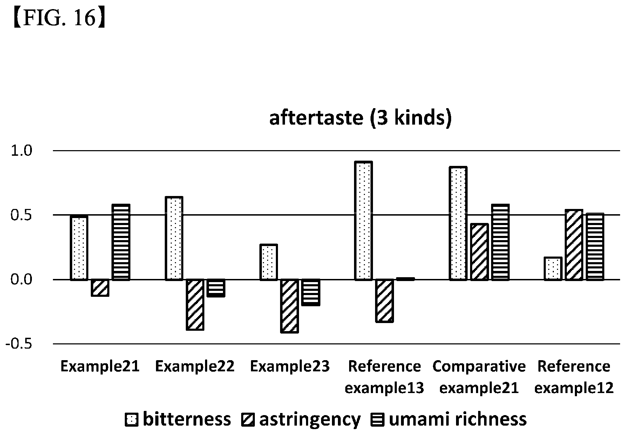

A list of measurement results is shown in FIGS. 15 and 16. In FIGS. 15 and 16, the vertical axis represents the taste item value, and a value of Reference example 11 is zero. The closed the value of the sample is to the value of Reference example 13, it is judged that the sample has excellent flavor. In Reference example 13, roasting was conducted by an expert with use of a professional roasting machine under meticulous adjustment of roasting conditions.

As can be seen from FIG. 15, all taste values of Examples 21 through 23 in astringency, saltness, bitterness and sourness, and umami were close to those of Reference example 13, whereas values of Comparative example 21 and Reference example 12 were in different tendencies. Some taste items of Comparative example 21 and Reference example 12 had opposite vectors in value or large different value from that of Reference example 13. Particularly, in values of saltness, bitterness, and umami, Examples 21 through 23 as well as Reference example 13 differ from Comparative example 21 and Reference example 12 by 1 or more. This difference can be perceived by an ordinary person and this tendency was consistent with the sensory evaluation results by panelists.

The aftertaste, in particular astringency, had a similar tendency as shown in FIG. 16. Examples 21 through 23 exhibited weak astringency represented by negative "-" whereas Reference Examples 12 and Comparative example 21 both exhibited strong astringency represented by positive "+". The astringency values of Reference examples 12 and Comparative example 21 were quite different from the value (best or strong) of Reference example 13. These astringency results might cause their inferior evaluation in flavor by panelists.

Accordingly, the objective evaluation using a taste sensing system assures that a drum-shaped roasting chamber made of graphite may achieve a production of roasting beans with excellent preservation in flavor as much as roasted beans that an expert roasts with an ordinary hot-air heating type roasting machine under manual adjustment.

Further, even in the case of direct heating, Examples 21 and 22 did not differ markedly from Example 23 and Reference Example 13 in which an expert roasted with a roasting machine including an ordinary drum-shaped roasting chamber under controlling the degree of heating with monitoring aroma. For these results, a graphite drum-shaped roasting chamber would be able to suppress the variation in flavor even if roasting conditions are not meticulously controlled.

### INDUSTRIAL APPLICABILITY

A roaster or roasting machine of the present invention may produce uniformly roasted beans in a batch which is roasted at the same time, based on a roasting chamber made of a carbon material, even if meticulous check and adjustment like an expert is not conducted and the substance is not stirred during roasting. Moreover, even a multilayered substance such as coffee bean can be uniformly heated to the inside, so that variation in quality between batches can be suppressed. Therefore, a roasting machine of the invention is useful for a home or personal roasting machine which is operated under automatic adjustment of roasting conditions such as temperature and time, as well as a professional roasting machine for specialty coffee shops or roasting industries. In all cases, roasted beans with mellow flavor would be produced by use of a roaster or roasting machine of the present invention.

Furthermore, it is possible to shorten preheating and cooling time periods based on a high thermal conductivity, and reduce contamination by exhaust gas in a duct. Therefore, a professional roasting machine used for roasting a large quantity of beans at one time may improve productivity and reduce fuel cost, which is also advantageous.

In addition, a roasting chamber made of carbon material can generate heat by utilizing its thermal and electrical characteristics of graphite, so that it is possible to provide a commercial roasting machine that uses electricity as a clean heat source. This is an advantage from the viewpoint of green chemistry.

### DESCRIPTION OF CODE

1, 6, 21, 31, 41 container type roasting chamber (open top container body)
2, 22, 32 closure member
2a, 22a vent
35 shelf board
5, 10, 20, 30 roaster
40 container type roasting machine
50 drum type roasting machine
51, 60, 60', 70, 90, 95 drum-shaped roasting chamber (cylindrical body)
42, 54, 75 stirring member
53 driving motor
62, 64 vent
63 CC composite plate
77, 85 flow path
83 hopper
97, 111 carbon heater
101, 110 stationary cylindrical body

## Claims

1. A roaster/roasting machine comprising a roasting chamber for roasting edible plant, wherein the roasting chamber is made of a carbon material having a bulk density of 1.2 to 2.2 g/cm³ and a thermal conductivity of 60 to 200 W/m · K at 25 °C.

2. The roaster/roasting machine according to claim 1,
wherein the carbon material is a graphite or a carbon fiber reinforced carbon composite.

3. The roaster/roasting machine according to claim 1 or 2,
wherein an inner surface of the roasting chamber is coated with a glass-like carbon coat, a pyrolytic carbon coat, a ceramic coat or a polysiloxane-based coat.

4. The roaster/roasting machine according to any one of claims 1 to 3,
wherein the roasting chamber includes either a container body having an opening at the top of the container body, or a cylindrical body having a circular or polygonal cross section perpendicular to a longitudinal axis of the cylindrical body.

5. The roaster/roasting machine according to claim 4,
wherein the roasting chamber includes the container body having an opening at the top thereof and made of the carbon material, and
wherein the roasting chamber further comprises a closure member for closing the opening of the container body.

6. The roaster/roasting machine according to claim 5,
wherein the closure member includes an opening or a notched portion serving as a vent between inside and outside of the roasting chamber.

7. The roaster/roasting machine according to claim 4,
wherein the roasting chamber includes the cylindrical body, the cylindrical body has an opening at one distal end in longitudinal direction or on a peripheral wall of the cylindrical body, so that the edible plant is charged or discharged via the opening.

8. The roaster/roasting machine according to claim 4,
wherein the roasting chamber includes the cylindrical body, the cylindrical body having a fixed perforated plate or an openable perforated closure member at a first distal end of the cylindrical body, wherein the perforated plate or the perforated closure member has a plurality of holes through which air flow can pass but the edible plant cannot pass.

9. The roaster/roasting machine according to claim 4 or 8,
wherein the roasting chamber is housed in a casing provided with an inlet for charging an edible plant and an outlet for discharging the roasted edible plant, and
wherein the roasting chamber includes the cylindrical body, the cylindrical body has an opening at a second distal end of the cylindrical body, and the opening end communicates with the inlet and the outlet.

10. The roasting machine according to any one of claims 7 to 9, further comprising a rotation mechanism for rotating the cylindrical body of the roasting chamber.

11. The roasting machine according to any one of claims 1 to 9, further comprising a heating means for heating the roasting chamber.

12. The roasting machine according to claim 11,
wherein the heating means is a gas stove, a gas combustion chamber, a heater, an induction heating coil, or a combination thereof.

13. The roasting machine according to any one of claims 1 to 12, further comprising a stirring member for stirring an eligible plant in the roasting chamber.

14. A roasting machine comprising
a hot air generator that generates hot air for roasting edible plant;
a drum-shaped roasting chamber supported in a way that a longitudinal axis of the cylindrical roasting chamber is horizontal, the drum-shaped roasting chamber being closed at one distal end in longitudinal direction with a fixed perforated plate or an openable perforated closure member, the perforated plate and the perforated closure member having a plurality of holes through which hot air from the hot air generator can pass; and
a rotation mechanism for rotating the cylindrical roasting chamber;
wherein the drum-shaped roasting chamber is made of a carbon material having a bulk density of 1.2 to 2.0 g/cm³ and a thermal conductivity of 60 to 200 W/m · K at 25 °C.

15. The roasting machine according to any one of claims 11 to 14, further comprising a control unit for controlling a temperature of the roasting chamber and roasting time.

16. A method for roasting beans comprising contacting beans with a heated graphite.
